(19) Europäisches Patentamt
European Patent Office
Office européen des brevets

(11) EP 0 925 320 B1

(12) **FASCICULE DE BREVET EUROPEEN**

(45) Date de publication et mention de la délivrance du brevet:
**24.01.2001 Bulletin 2001/04**

(21) Numéro de dépôt: **97919088.1**

(22) Date de dépôt: **12.09.1997**

(51) Int Cl.[7]: **C08G 73/12**, C08G 59/40, C08G 18/67

(86) Numéro de dépôt international:
**PCT/FR97/01612**

(87) Numéro de publication internationale:
**WO 98/11152 (19.03.1998 Gazette 1998/11)**

(54) **COMPOSITIONS DE REVETEMENT POLYMERISABLES ET/OU RETICULABLES PAR LA LUMIERE ULTRAVIOLETTE OU VISIBLE**

POLYMERISIERBARE UND/ODER VERNETZBARE DURCH ODER UV- ODER SICHTBARE LICHTBESCHICHTUNGSMISSCHUNGEN

COATING COMPOSITIONS POLYMERISABLE AND/OR CROSS-LINKABLE BY ULTRAVIOLET OR VISIBLE LIGHT

(84) Etats contractants désignés:
**AT BE CH DE DK ES FI FR GB IE IT LI NL PT SE**

(30) Priorité: **12.09.1996 FR 9611134**

(43) Date de publication de la demande:
**30.06.1999 Bulletin 1999/26**

(73) Titulaire: **CRAY VALLEY SA**
**92800 Puteaux (FR)**

(72) Inventeurs:
- **THEPOT, Philippe**
  **F-60140 Liancourt (FR)**
- **STRUB, Henri**
  **F-60700 Pont Sainte Maxence (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 077 840**
**DE-A- 3 507 609**
**DE-A- 4 028 845**
**FR-A- 2 430 962**
**FR-A- 2 476 102**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention porte sur des compositions de revêtement polymérisables et/ou réticulables par la lumière ultraviolette ou visible, comprenant au moins un composé (A) contenant des doubles liaisons oléfiniques appauvries en électrons et au moins un composé (B) contenant des doubles liaisons oléfiniques enrichies en électrons.

Les maléimides sont des monomères intéressants en tant que composés à doubles liaisons appauvries en électrons dans des compositions de revêtement polymérisables par rayonnement, mettant en jeu à la fois des composés de ce type et des composés à doubles liaisons enrichies en électrons. Les maléimides sont d'autant plus intéressants dans ce type de composition qu'ils permettent, si par ailleurs on choisit convenablement les composés à doubles liaisons enrichies en électrons, de se passer d'un photoinitiateur, comme décrit dans US-A-5 446 073.

Cependant, la synthèse des maléimides est toujours difficile, ce qui rend ces composés coûteux, et, en conséquence, ce qui rend coûteuses les compositions dans lesquelles ils entrent.

Les maléimides disponibles de façon courante sur le marché (ceux dont la synthèse est la moins coûteuse) sont les maléimides N-substitués par des groupements aromatiques. De tels maléimides ne sont guère solubles, ce qui empêche de les utiliser dans un certain nombre de cas. De plus, les groupements aromatiques diminuent le caractère attracteur des maléimides qui les comportent, et absorbent une partie de la lumière ultraviolette.

Par ailleurs, d'une façon générale, dans les compositions polymérisées, les maléimides monomères risquent, s'ils ne sont pas complètement polymérisés, de conduire à des problèmes de migration.

Etant à la recherche de nouveaux maléimides qui ne présentent pas l'ensemble des inconvénients qui viennent d'être indiqués, la Société Déposante a découvert une nouvelle classe de composés de type (A) qui consistent en des prépolymères comportant des fonctions maléimides, et qui offrent de nombreuses possibilités pour satisfaire aux exigences spécifiques des applications telles que le revêtement des fibres optiques, le revêtement de substrats tels que le bois, le papier, le métal, le plastique, le verre qui requièrent des propriétés d'adhésion, de dureté, de flexibilité, d'élasticité, de résistance à l'abrasion, de résistance aux solvants, de tenue extérieure, ceci grâce à la très grande flexibilité et à la versatilité du procédé de synthèse qui donne accès à une très large gamme de composés et qui permet de moduler la nature et la structure des chaînes polymères en fonction des propriétés désirées. D'autre part, cette nouvelle classe de composés (A) inclut les maléimides aliphatiques, jusqu'ici difficilement accessibles, qui sont particulièrement intéressants dans des compositions de revêtement polymérisables par rayonnement mettant en jeu à la fois des composés à doubles liaisons appauvries en électrons et des composés à doubles liaisons enrichies en électrons. Ainsi, on a découvert que, de façon surprenante, la réactivité d'une formulation dont le composé (A) est un prépolymère comportant des fonctions maléimide tel que défini ci-après est jusqu'à 10 fois plus importante que celle d'une même formulation dont le composé (A) est un prépolymère similaire au précédent mais non fonctionnalisé par des groupements maléimides, et jusqu'à 6 fois supérieure à celle du même prépolymère non fonctionnalisé en mélange avec un maléimide monomère disponible commercialement.

Autrement dit, un revêtement de la nouvelle formulation conduit à un film non-collant en un laps de temps jusqu'à 10 fois plus court qu'avec ces formulations de référence.

La présente invention a donc d'abord pour objet des compositions polymérisables et/ou réticulables telles que définies ci-dessus, caractérisées par le fait que le ou les composés (A) sont choisis parmi les prépolymères comportant des fonctions maléimides (f) :

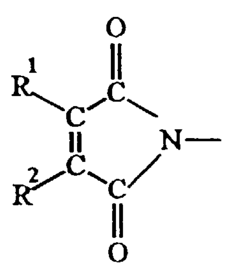

(f)

où $R^1$ et $R^2$ représentent chacun indépendamment H, alkyle en $C_1$-$C_{12}$ ou halogène,
et consistant en les produits de réaction :

- d'au moins un anhydride maléique de formule (I) :

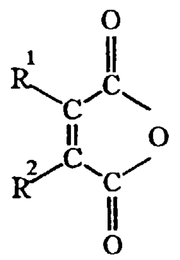

(I)

dans laquelle $R^1$ et $R^2$ sont tels que définis ci-dessus;

- d'au moins un composé (II) comportant au moins une fonction $-NH_2$ et au moins une autre fonction F choisie parmi -OH, $-NH_2$, -NH-, -COOH,

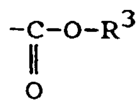 ou 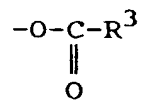,

  $R^3$ représentant un reste alkyle en $C_1$-$C_5$ ;
- d'au moins un composé (III) de formation de la chaîne du prépolymère par polycondensation et/ou polyaddition,

le(s) composé(s) (II) ayant d'abord réagi avec le ou les anhydrides maléiques (I) pour ouvrir les cycles anhydride maléique, avec formation de fonctions acide maléamique (f') :

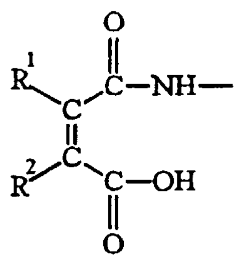

(f')

lesquelles ont été ensuite au moins partiellement refermées sous l'action de la chaleur pour donner des maléimides N-substitués par des groupements fonctionnalisés par une fonction F,
la chaîne desdits prépolymères ayant été formée par polycondensation et/ou polyaddition :

- du maléimide N-substitué formé portant la fonction F ;
- du ou des composés (III) ;
- des produits non cyclisés portant ou non une fonction F formés en même temps que lesdits maléimides N-substitués ;
- du ou des anhydrides maléiques (I) ayant pu se trouver en excès après leur ouverture par le(s) composé(s) (II) ;

les fonctionnalités du ou des composé(s) (III) étant choisies pour permettre la constitution de la chaîne avec le greffage desdits maléimides N-substitués sur la chaîne directement par leur fonction F lorsque celle-ci est au moins l'une parmi -OH, $-NH_2$, -NH- et COOH, ou bien après transestérification des fonctions F lorsque celles-ci sont $-COOR^3$ ou $-OCOR^3$ pour permettre la condensation ou l'addition dudit maléimide N-substitué sur la chaîne, les fonctionnalités et proportions des composés (II) et (III) ayant été choisies de façon à exclure une gélification du milieu réactionnel.

Dans le prépolymère (A), le(s) composé(s) (II) a (ou ont) généralement réagi avec le (ou les) anhydride(s) (I) dans des conditions stoechiométriques ou sensiblement stoechiométriques ou en excès du (ou des) anhydride(s) (I) par rapport au(x) composé(s) (II).

De préférence, l'anhydride de formule (I) est l'anhydride maléique.

Les composés (II) sont notamment choisis parmi les composés des formules $H_2N$-A-OH, $H_2N$-A-COOH, $H_2N$-A-$COOR^3$,

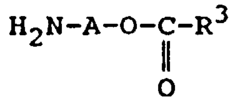

et $H_2N-A-NH_2$, dans lesquelles A représente un reste alkylène, linéaire, ramifié ou cyclique, ou un reste arylène, ces restes pouvant être interrompus par des atomes d'oxygène ou de soufre, ou par des groupements $-NR^4-$, $R^4$ représentant hydrogène ou alkyle.

A titre d'exemples de ces composé(s) (II), on peut citer :

- les aminoalcools, tels que l'éthanolamine, la propanolamine, l'isopropanolamine, le 2-(2-aminoéthoxy)éthanol, la N-(2-aminoéthyl)éthanolamine ;
- les aminoacides, tels que la valine, l'acide p-aminobenzoïque, l'alanine, l'acide 2-aminohexanoïque, l'acide 6-aminohexanoïque, l'acide 7-aminoheptanoïque, l'acide 2-aminoisobutyrique ;
- les esters méthyliques ou éthyliques des aminoacides ci-dessus ;
- les esters des acides carboxyliques en $C_2$-$C_5$, tels que l'acide acétique, avec les aminoalcools ci-dessus ;
- les diamines, telles que l'éthylènediamine, la 2-méthyl-1,5-pentaméthylènediamine, l'hexaméthylènediamine, la 2,2,4- et/ou 2,4,4-triméthylhexaméthylènediamine, la dodécaméthylènediamine, la 5-méthylnonaméthylènediamine, la décaméthylènediamine, l'isophoronediamine, le bis(4-aminocyclohexyl)méthane, le bis(3-méthyl-4-aminocyclohexyl)méthane, le bis(3-méthyl-4-amino-5-éthylcyclohexyl)méthane, le 1,2-bis(4-aminocyclohexyl)éthane, le 2,2'-bis(4-aminocyclohexyl)propane, le 2,2'-bis(3-méthyl-4-aminocyclohexyl)propane, la 4,7-dioxadécane-1,10-diamine, la 4,9-dioxadodécane-1,12-diamine, la 4,7,10-trioxatridécane-1,13-diamine; et
- les di- ou triamines polyoxyéthylénées et/ou polyoxypropylénées commercialisées sous la dénomination de Jeffamine®.

On peut également citer des composés (II) trifonctionnels tels que la L-sérine, l'acide 3-hydroxy 4-amino benzoïque et l'acide 3-amino 4-hydroxy benzoïque et d'autres triamines telles que la N-(2-aminoéthyl)-1,2-éthanediamine et la N-(3-aminopropyl)-1,3-propanediamine.

- Lorsque le maléimide N-substitué comporte une fonction F qui est -OH, $-NH_2$ ou -NH-, les composés (III) sont notamment :
  - au moins un polyacide et/ou au moins un anhydride cyclique ; et
  - au moins l'un parmi un polyol, un époxy mono- ou polyfonctionnel, une polyamine et un polyisocyanate ; ou
  - au moins un polyisocyanate ; et
  - éventuellement au moins l'un parmi un polyol, un époxy mono- ou polyfonctionnel, un polyacide et/ou un anhydride cyclique et une polyamine.
- Lorsque le maléimide N-substitué comporte une fonction F qui est -COOH, les composés (III) sont notamment :
  - au moins l'un parmi un polyol, un époxy mono- ou polyfonctionnel ou une polyamine ; et
  - éventuellement un polyacide et/ou un anhydride cyclique ou un polyisocyanate ; ou
  - au moins un polyisocyanate ; et
  - éventuellement au moins l'un parmi un polyol, un époxy mono- ou polyfonctionnel, un polyacide et/ou un anhydride cyclique et une polyamine.
- Lorsque le maléimide N-substitué comporte une fonction F qui est

  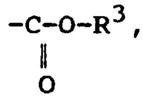

  les composés (III) sont notamment :
  - au moins un composé permettant la transestérification, comportant une fonction -OH et au moins une autre fonction choisie parmi -OH, -NH- et -COOH ; et
  - dans le cas où cette autre fonction est -OH ou -NH-, les composés (III) tels que définis ci-dessus dans le cas

où le maléimide N-substitué comporte une fonction F qui est -OH, $-NH_2$ ou -NH- ; et

- dans le cas où cette autre fonction est -COOH, les composés (III) tels que définis ci-dessus dans le cas où le maléimide N-substitué comporte une fonction F qui est -COOH.

- Lorsque le maléimide N-substitué comporte une fonction F qui est

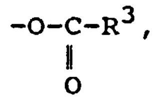

les composés (III) sont notamment :

- au moins un composé permettant la transestérification, comportant une fonction acide et au moins une autre fonction choisie parmi -OH, -NH- et -COOH ; et
- dans le cas où cette autre fonction est -OH ou -NH-, les composés (III) tels que définis ci-dessus dans le cas où le maléimide N-substitué comporte une fonction F qui est -OH, $-NH_2$ ou -NH- ; et
- dans le cas où cette autre fonction est -COOH, les composés (III) tels que définis ci-dessus dans le cas où le maléimide N-substitué comporte une fonction F qui est -COOH.

Les polyols en tant que composés (III) sont, de préférence, des diols ou des triols, des polyols de fonctionnalité supérieure (pentaérythritol par exemple) pouvant cependant être présents en petites quantités. Comme diols ou triols, on peut citer le propylène glycol, le dipropylène glycol, le diéthylène glycol, l'éthylène glycol, le 1,3-butanediol, le 1,4-butanediol, le néopentyl glycol, le triéthylène glycol, le tripropylène glycol, le butylène glycol, le glycérol, le triméthylol propane, le 1,6-hexane diol, le 1,4-cyclohexane diol, le 1,4-cyclohexanediméthanol, le 2-méthyl-1,3-propane diol, le 2-butyl-2-éthyl-1,3-propane diol, le 1,2-bis(hydroxyéthyl)cyclohexane, la 4'-(2-hydroxyéthoxy)-2,2-diméthyl-2-hydroxyacétophénone, le 2,2-diméthyl-3-hydroxypropyl-2,2-diméthyl-3-hydroxy propionate et le dibromonéopentylglycol, ainsi que les polyéther polyols, les polyester polyols, les polyuréthane polyols de masse moléculaire moyenne en poids notamment comprise entre 200 et 1000. Des monoalcools peuvent éventuellement être ajoutés en petites quantités.

Les composés époxy en tant que composés (III) sont généralement des mono- et diépoxy parmi lesquels on peut citer l'épichlorhydrine, le 7-oxabicyclo[4.1.0]-heptane, le 3,4-époxycyclohexylméthyl 3,4-époxycyclohexane carboxylate, le diglycidyl éther de bisphénol A, le 1,2-époxydécane, le 3,3,3-trichloropropylène oxyde et l'allyl glycidyl éther.

Les polyisocyanates en tant que composés (III) sont surtout des diisocyanates, tels que le 4,4'-diphénylméthane diisocyanate, le triméthylhexaméthylène diisocyanate, le toluène diisocyanate, l'isophoronediisocyanate, le tétraméthylène diisocyanate, le pentaméthylène diisocyanate, le 4,4'-dicyclohexylméthane diisocyanate, le 2,2,4-triméthyl-hexaméthylène-1,6-diisocyanate, le triphénylméthane-4,4',4"-triisocyanate, le polyméthylène polyphénylisocyanate, le m-phénylène diisocyanate, le p-phénylène diisocyanate, le 1,5-naphtalène diisocyanate, le naphtalène-1,4-diisocyanate, le diphénylène-4,4'-diisocyanate, le 3,3'-bi-tolylène-4,4'-diisocyanate, le 1,4-cyclohexylène diméthylène diisocyanate, le xylylène-1,4-diisocyanate, le xylylène-1,3-diisocyanate, le cyclohexyl-1,4-diisocyanate et le 3,3'-diméthyldiphénylméthane-4,4'-diisocyanate, ainsi que les prépolymères de type polyurée ou polyuréthane à terminaisons isocyanate, généralement de faible masse moléculaire, tels que les condensats de polyols et/ou de polyamines avec un excès de polyisocyanate ; et les polyisocyanates qui contiennent, dans leur molécule, un cycle isocyanurate et les biurets à fonctions terminales isocyanate.

A titre d'illustration de polyisccyanates qui contiennent dans leur molécule le cycle isocyanurate, on peut citer les trimères de l'hexaméthylène diisocyanate commercialisés par la Société RHÔNE-POULENC sous la dénomination TOLONATE HDT, le tris [1-(isocyanatométhyl)-1,3,3-triméthylcyclohexane]isocyanurate commercialisé par la Société HULS sous la dénomination VESTANAT T 1890/100.

A titre d'exemple de biurets, on peut citer le biuret du diisocyanato-1,6-hexane commercialisé par la Société BAYER sous la dénomination DESMODUR N100.

Comme exemples de polyacides en tant que composés (III), on peut citer principalement les diacides, tels que les acides maléique, fumarique, chloromaléique, citraconique, métaconique, itaconique, tétraconique, orthophtalique, isophtalique, téréphtalique, succinique, méthylsuccinique, adipique, sébacique, tétrabromophtalique, tétrachlorophtalique, glutarique, pimélique, pyromellitique.

Les anhydrides cycliques en tant que composés (III) sont choisis parmi l'anhydride maléique, l'anhydride succinique, l'anhydride phtalique, l'anhydride trimellitique, l'anhydride pyromellitique, l'anhydride tétrahydrophtalique, l'anhydride hexahydrophtalique, les anhydrides chlorés tels que l'anhydride chlorendique, l'anhydride tétrachlorophtalique et l'anhydride tétrabromophtalique, l'anhydride méthyltétrahydrophtalique, l'anhydride nadique, l'anhydride méthyl nadique, l'anhydride itaconique, l'anhydride citraconique, et l'anhydride glutarique. On cite plus particulièrement l'anhydride maléique ou l'anhydride succinique. Un anhydride comportant un fragment photoinitiateur, tel que le dianhydride de l'acide 3,3',4,4'-benzophénonetétracarboxylique, peut être utilisé dans certaines applications.

Les polyamines en tant que composés (III) sont, de préférence, des diamines telles que l'éthylène diamine, la 2-méthyl-1,5-pentaméthylène diamine, la triméthylhexane-1,6-diamine, l'hexaméthylènediamine, la 2,2,4- et/ou 2,4,4-triméthylhexaméthylènediamine, la dodécaméthylènediamine, la triméthylhexaméthylènediamine, la 5-méthylnonaméthylènediamine, la décaméthylènediamine, l'isophoronediamine, le bis(4-aminocyclohexyl)méthane, le bis (3-méthyl-4-aminocyclohexyl)méthane, le bis(3-méthyl-4-amino-5-éthylcyclohexyl)-méthane, le 1,2-bis(4-aminocyclohexyl)éthane, le 2,2'-bis(4-aminocyclohexyl)propane et le 2,2'-bis(3-méthyl-4-aminocyclohexyl)propane.

Des exemples de composés (III) permettant la transestérification, comportant un fonction OH et au moins une autre fonction choisie parmi -OH, -NH- et COOH, sont l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, le 2-(butylamino)éthanol, le 2-(cyclohexylamino)éthanol, le 2-(phénylamino)éthanol, la 3-hydroxypipéridine, la 4-hydroxypipéridine, le dipropylène glycol, le tripropylène glycol, le triéthylène glycol, le 1,6-hexanediol, le 1,4-cyclohexanediol, le 1,4-cyclohexanediméthanol, le 2-butyl 2-éthyl 1,3-propanediol et le 1,2-bis(hydroxyéthyl)cyclohexane.

Des exemples de composés (III) permettant la transestérification, comportant une fonction acide et au moins une autre fonction choisie parmi -OH, -NH- et -COOH, sont l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, la N-méthyl glycine, l'acide 2-méthylamino benzoïque, l'acide orthophtalique, l'acide téréphtalique, l'acide isophtalique, l'acide adipique, l'acide pimélique, l'acide sébacique, l'acide tétrabromophtalique et l'acide tétrachlorophtalique.

La masse moléculaire moyenne en nombre ($\overline{Mn}$) des prépolymères (A) peut être comprise entre 350 et 5000, notamment entre 500 et 3000 (mesurée par GPC, étalonnage avec le polystyrène). Par ailleurs, lesdits prépolymères peuvent comporter 0,02 à 5 moles de groupements maléimide, notamment 0,05 à 2 moles de groupements maléimide, par kg de prépolymère.

En outre, après leur formation, les fonctions acides terminales des prépolymères (A) peuvent avoir réagi avec un composé monoépoxy pour régler l'indice d'acide desdits prépolymères, en particulier à une valeur inférieure à 5 mg KOH/g.

Pour préparer les prépolymères (A) tels que définis ci-dessus, on peut faire réagir au moins un composé (I), au moins un composé (II) et au moins un composé (III), lesdits composés (I), (II) et (III) étant tels que définis ci-dessus, dans des conditions permettant au(x) composé(s) (II) de réagir d'abord avec l'anhydride maléique (I) pour ouvrir les cycles anhydride maléique, des fonctions acide maléamique se formant par ouverture de ces cycles anhydride maléique par la fonction amine primaire du composé (II), puis étant refermées au moins partiellement en cycles maléimide, par chauffage, les maléimides ainsi formés réagissant avec le ou les composés (III) et la chaîne dudit prépolymère étant formée par des réactions de polycondensation et/ou de polyaddition mettant en jeu le ou les composés (III) et/ou, dans le cas où il resterait de l'anhydride maléique en excès après ouverture de (I) par (II), ledit excès d'anhydride maléique (I), les produits non cyclisés entrant également dans la composition de la chaîne, les fonctionnalités et proportions des composés (II) et (III) ayant été choisies de façon à exclure une gélification du milieu réactionnel.

Conformément à un premier mode de réalisation de ce procédé,

- dans une première étape, on fait réagir en milieu solvant polaire, dans des conditions stoechiométriques ou sensiblement stoechiométriques, au moins un anhydride maléique (I) avec au moins un composé (II) pour ouvrir les cycles anhydride ;
- dans une deuxième étape, après évaporation dudit solvant polaire et, le cas échéant, après ajout au milieu réactionnel d'au moins un polyacide et/ou un anhydride cyclique en tant que composé (III) on conduit une réaction de cyclisation par chauffage du milieu réactionnel issu de la première étape, ladite cyclisation refermant au moins partiellement les cycles anhydride maléique ouverts à l'étape précédente pour donner un produit de cyclisation au moins partielle comportant, si l'on a opéré en l'absence d'anhydride cyclique (III), des maléimides N-substitués par des groupements fonctionnalisés, selon le(s) composé(s) (II) utilisé(s), par -OH ou -COOH ou

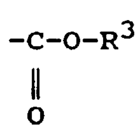 ou 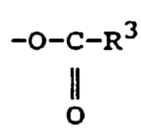

ou $-NH_2$ ou -NH-, ou bien, si l'on a opéré en présence d'anhydride cyclique (III), des maléimides N-substitués par des groupements fonctionnalisés par -COOH ou

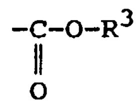 ou 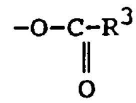

avec formation du diacide correspondant audit anhydride cyclique (III), le cas échéant en mélange avec l'excès d'anhydride (III) ou (I) n'ayant pas réagi ; et

- dans une troisième étape, on engage ledit produit de cyclisation au moins partielle dans une réaction de polycondensation et/ou de polyaddition avec au moins un composé (III) tel que défini ci-dessus.

. A la première étape, les cycles anhydride maléique sont ouverts par au moins une partie des fonctions $-NH_2$, -NH- ou OH du ou des composés (II), l'ouverture par les fonctions $-NH_2$ conduisant à des fonctions acide maléamique (f') :

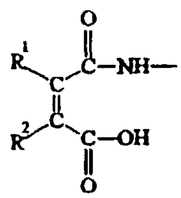

(f')

Suivant le type de composé (II) utilisé, on peut obtenir l'ouverture d'un ou plusieurs cycles anhydride maléique par ledit composé (II). Les fonctions COOH ou $COOR^3$ ou $-OCOR^3$ de (II), le cas échéant présentes, restent libres.

Cette première étape est généralement conduite à une température de 0 à 80°C, notamment de 0 à 20°C, pendant un laps de temps de 1 à 10 heures, notamment de 1 à 3 heures, dans un solvant polaire, tel que l'acétone, l'éthanol, le chloroforme, le dichlorométhane, le tétrahydrofuranne, la cyclohexanone, le dioxanne, la méthyléthylcétone et l'acétate d'éthyle.

. Avant de démarrer la deuxième étape (cyclisation au moins partielle), sauf si l'on garde le même solvant, on élimine généralement par évaporation le solvant polaire de la première étape, ce dernier pouvant être avantageusement recyclé. Ladite cyclisation est avantageusement conduite en présence d'au moins un catalyseur de cyclisation, lequel est généralement choisi parmi les sels de métaux tels que le nitrate, le chlorure, le bromure, le sulfate et l'acétate de magnésium, le nitrate, le chlorure, le bromure et l'acétate de lithium, le nitrate, le chlorure et l'acétate de manganèse (II), le nitrate, le chlorure, le bromure, le sulfate et l'acétate de cobalt (II), ainsi que les sels de zinc de l'acide maléamique.

Dans le cas où la deuxième étape est conduite en présence d'anhydride cyclique [(III) et/ou un excès de (I)], on opère généralement à une température de 40 à 160°C, notamment de 80 à 120°C, pendant un laps de temps de 0,5 à 10 heures, notamment de 1 à 6 heures, dans un solvant aprotique, tel que le toluène et le xylène. On peut également travailler en l'absence de solvant, l'excès d'anhydride pouvant être considéré comme servant de solvant.

Dans le cas où la deuxième étape est conduite en l'absence d'anhydride, on opère généralement à une température de 40 à 160°C, notamment de 80 à 110°C, pendant un laps de temps de 0,5 à 10 heures, notamment de 3 à 7 heures, dans un solvant de l'acide amique obtenu à la première étape. On peut citer l'éthanol et le méthanol.

Le solvant qui serait utilisé à cette étape est ensuite généralement évaporé et peut également être avantageusement recyclé.

. Les réactions de polycondensation et/ou de polyaddition de la troisième étape sont des réactions classiques bien connues de l'homme du métier :

  - Dans le cas d'une polycondensation avec au moins un polyol ou un époxy et, le cas échéant avec au moins un polyacide ou un anhydride, cette étape peut être conduite à une température de 150 à 250°C, le cas échéant en présence d'au moins un catalyseur d'estérification, tel que, par exemple, le titanate de tétrabutyle, le zirconate de tétrabutyle, le naphténate de zirconium, des mélanges d'oxalate d'étain et d'acétate de sodium, le chlorure stanneux, le chlorure stannique, l'oxyde de dibutylétain, l'hydroxyde de tributylétain et l'acide butyl stannoïque et, le cas échéant, en présence d'au moins un inhibiteur de polymérisation radicalaire, tel que

l'hydroquinone et ses dérivés, tels que l'éther monométhylique de l'hydroquinone, la triméthyl-hydroquinone, la quinone et ses dérivés, tels que la toluhydroquinone, la monohydroquinone de tertiobutyle, le paratertiobutylcatéchol, la phénothiazine, les N,N-dialkylhydroxyamines, le nitrobenzène, le ditertiobutylcatéchol, la p-phénolaniline, le di-(2-éthylhexyl)-octylphényl phosphite, le 2,5-ditertiobutyl-4-hydroxytoluène, le naphténate de cuivre, le bleu de méthylène et leurs mélanges. Habituellement, le catalyseur ou le mélange de catalyseurs est présent à raison de 0,01 à 0,2% environ en poids du mélange réactionnel, et l'inhibiteur ou le mélange d'inhibiteurs est présent à raison de 0,01 à 0,2% environ en poids du mélange réactionnel. Le début de la réaction est généralement effectué à la pression atmosphérique, la fin étant conduite le cas échéant sous pression réduite.

- Dans le cas d'une réaction avec un polyisocyanate et, le cas échéant, avec au moins un polyacide et/ou un polyol et/ou un époxy, un anhydride pouvant être présent si un polyol est également présent, cette troisième étape peut être conduite à une température de 20 à 200°C, la réaction d'addition du polyacide avec le polyisocyanate pouvant être réalisée en présence d'un catalyseur, tel que la triéthylamine, la benzyldiméthylamine, le 1,4-diazabicyclo[2.2.2]octane, le cyanure de potassium ou de sodium, la réaction d'addition du polyol avec le polyisocyanate pouvant être réalisée en présence d'un catalyseur, tel que la triéthylamine, le naphténate de cobalt, le chlorure stanneux, le chlorure stannique, l'hydroxyde de tributylétain, l'oxyde de dibutylétain, le dilaurate de dibutylétain, le tétrabutylétain.
  Dans le cas où la deuxième étape est conduite en présence d'anhydride [(III) ou excès de (I)], on peut à la troisième étape ajouter un polyisocyanate et/ou un polyol, avec éventuellement un polyacide (III) ; dans le cas où la deuxième étape est conduite en l'absence d'anhydride, on peut à la troisième étape ajouter soit un polyisocyanate seul, soit un polyisocyanate et un polyol et/ou un polyacide.

S'il y a des réactions d'estérification (acide + alcool) et des réactions d'addition, les réactions d'estérification sont effectuées d'abord entre 150 et 250°C, puis les réactions d'addition (isocyanate + alcool ou acide), à des températures inférieures à 150°C.

Par ailleurs, dans une étape préliminaire, on peut protéger la double liaison

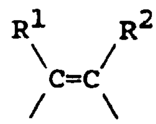

de l'anhydride (I) par réaction avec un agent protecteur choisi parmi le furane, les dérivés du furane, le cyclopentadiène, les dérivés du cyclopentadiène, le furane et le cyclopentadiène étant préférés, la déprotection ayant lieu à partir de la deuxième étape sous l'action de la chaleur.

Le procédé conforme à ce mode de réalisation est donc un procédé "one-pot", ne nécessitant pas d'isoler les produits réactionnels après chaque étape, la seule mesure à prendre le cas échéant après les première et seconde étapes étant l'évaporation du solvant.

Conformément à un second mode de réalisation de ce procédé,

- dans une première étape, on fait réagir, en milieu solvant polaire, à une température de 20 à 150°C, notamment entre 80 et 130°C, au moins un anhydride maléique (I) avec au moins un composé (II), le(s) composé(s) (I) étant en excès stoechiométrique par rapport au(x) composé(s) (II), pour former un produit de cyclisation partielle comprenant des maléimides N-substitués fonctionnalisés par -COOH ou

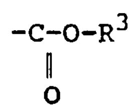

ou

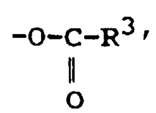

des produits d'ouverture de(s) anhydride(s) (I), le diacide correspondant à 1' anhydride (I), le cas échéant en mélange avec l'excès d'anhydride (I) ; et

- dans une deuxième étape, on engage ledit produit de cyclisation partielle dans une réaction de polycondensation et/ou de polyaddition avec au moins un composé (III) tel que défini ci-dessus.

Conformément à un troisième mode de réalisation de ce procédé, on fait réagir au moins un composé (I), au moins un composé (II) et au moins un composé (III) choisi parmi les polyols, les époxy et les polyamines, et éventuellement les polyacides et les anhydrides cycliques, en l'absence de solvant, avec un excès stoechiométrique du (ou des) composé(s) (I) par rapport au(x) composé(s) (II), à une température de 180°C-200°C que l'on atteint par paliers ou directement ou progressivement, en éliminant le cas échéant l'eau de condensation, puis, le cas échéant, on porte le mélange à une température inférieure à 160°C, on ajoute au moins un polyisocyanate (III) et on conduit la réaction alcool/isocyanate à cette température.

Conformément à un quatrième mode de réalisation de ce procédé, on fait réagir au moins un composé (I) et au moins un composé (II), avec un excès stoechiométrique du (ou des) composé(s) (I) par rapport au(x) composé(s) (II), en l'absence de solvant, à une température de 20-150°C pendant 1 à 3 heures, puis on ajoute un composé (III) choisi parmi les polyols, les époxy et les polyamines, et éventuellement les polyacides et les anhydrides cycliques, et l'on porte le milieu réactionnel à une température de 180°C-200°C que l'on atteint par paliers ou directement ou progressivement, en éliminant le cas échéant l'eau de condensation, puis, le cas échéant, on porte le mélange à une température inférieure à 160°C, on ajoute au moins un polyisocyanate (III) et on conduit la réaction alcool/isocyanate à cette température.

Conformément à un cinquième mode de réalisation de ce procédé, on fait réagir au moins un composé (I), au moins un composé (II), et comme composés (III), au moins un polyisocyanate et au moins un polyacide, et éventuellement au moins l'un parmi un polyol, un époxy et une polyamine, en l'absence de solvant, avec un excès stoechiométrique des (ou des) composé(s) (I) par rapport au(x) composé(s) (II), à une température inférieure à 160°C.

Les procédés conformes à ces deuxième à cinquième modes de réalisation sont également de type "one-pot".

Le cas échéant, une étape supplémentaire est effectuée afin de réduire l'indice d'acide de certains prépolymères à une valeur par exemple inférieure à 5 mg KOH/g par addition d'un monoépoxy dans des conditions bien connues de l'homme du métier, généralement de l'ordre de 110 à 150°C, afin que ce monoépoxy réagisse avec les groupements carboxyliques résiduels du prépolymère.

La composition selon l'invention peut facultativement comprendre également au moins un composé (A') choisi parmi les maléimides N-substitués, de formule :

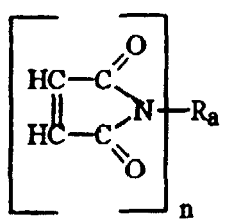

ou

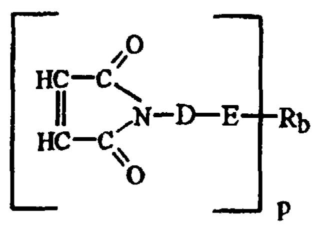

avec :

- $R_a$, $R_b$ = groupement hydrocarboné mono à tétravalent, aliphatique, aromatique ou à structure mixte aliphatique-aromatique ;
- n, p = 1 à 4 ;
- D est un reste alkylène, arylène, alkylarylène ou arylalkylène ; et
- E est une liaison ester (COO ou OCO) ou une liaison uréthane

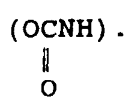

Des exemples de ces maléimides avec n=1 et $R_a$ = alkyle notament en $C_1$-$C_{12}$, aryle, arylalkyle ou alkylaryle, notamment en $C_6$-$C_{12}$, sont le N-éthylmaléimide, le N-isopropylmaléimide, le N-n-butylmaléimide, le N-isobutylmaléimide, le N-tert.-butylmaléimide, le N-n-octylmaléimide, le N-cyclohexylmaléimide, le N-benzylmaléimide, et le N-phénylmaléimide.

Le ou les composés (B) entrant dans la composition selon l'invention sont avantageusement choisis parmi :

- les composés représentés par la formule (V) :

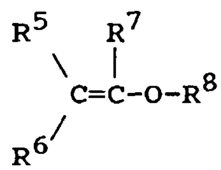

(V)

dans laquelle :

  - $R^5$, $R^6$ et $R^7$ représentent chacun indépendamment hydrogène ou un groupe aliphatique, de préférence un groupe alkyle en $C_1$-$C_{12}$, tel que méthyle, éthyle et propyle ; et
  - $R^8$ représente un reste aliphatique ou un reste aromatique, éventuellement substitué par exemple par OH,

- les composés représentés par la formule (VI) :

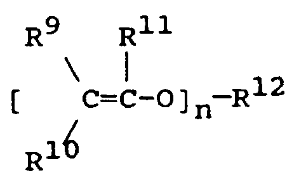

(VI)

dans laquelle :

  - $R^9$, $R^{10}$ et $R^{11}$ représentent chacun indépendamment hydrogène ou un groupe aliphatique, de préférence un groupe alkyle en $C_1$-$C_{12}$, tel que méthyle, éthyle et propyle ; et
  - $R^{12}$ est un reste n-valent d'un polyol organique ;
  - n est un entier de 2 à 6 ;

- la N-vinyl pyrrolidone, le N-vinyl imidazole, la 2-vinyl pyridine, le N-vinylcarbazole, le N-vinyl caprolactame, le para-méthoxystyrène, l'isoeugénol, le 4-propénylanisole, le 4-vinylbutoxy carbonate de monobutyle, le 4-propényl butoxycarbonate de monobutyle, le N-vinyl-formamide et ses dérivés.

Comme composés de formule (V) préférés, on peut citer les vinyl éthers monofonctionnels, en particulier le méthyl vinyl éther, l'éthyl vinyl éther, le butyl vinyl éther, l'isobutyl vinyl éther, l'octadécyl vinyl éther, le 4-hydroxybutyl vinyl éther, le dodécyl vinyl éther.

Comme composés de formule (VI) préférés, on peut citer les vinyl éthers polyfonctionnels, en particulier ceux obtenus d'une manière connue à partir d'un diol organique di-, tri- ou tétra-fonctionnel, d'acétylène et d'un catalyseur basique sous haute pression. En particulier, on peut mentionner le triéthylène glycol divinyl éther, le tripropylène glycol divinyl éther, le diéthylène glycol divinyl éther, le 1,4-butanediol divinyl éther, le tétraéthylène glycol divinyl éther, le cyclohexanediméthanol divinyléther, le bis(4-vinyloxybutyl)succinate, le bis(4-vinyloxyméthylcyclohexylméthyl)glutarate, le 1,3-benzènedicarboxylique acide, bis[4-(éthényloxy)butyl]ester.

Le rapport du nombre de doubles liaisons du ou des composés riches en électrons (B) sur le nombre de doubles liaisons du ou des composés appauvris en électrons (A) et le cas échéant (A') est généralement compris entre 1:5 et 5:1, préférentiellement entre 0,8:1 et 1 :0,8.

Comme indiqué, le choix des composés (A) de l'invention permet de se passer complètement de l'emploi des photoinitiateurs et photosensibilisateurs traditionnels.

On peut cependant envisager dans certaines applications d'utiliser des photoinitiateurs et photosensibilisateurs; dans ce cas, les concentrations de ces derniers sont plus faibles que celles couramment utilisées.

A titre d'exemples de photoinitiateurs, on peut citer :

- les $\alpha$-dicétones, comme le benzile et le diacétyle ;
- les acyloïnes, comme la benzoïne ;
- les acyloïn éthers, comme le benzoïn méthyl éther, le benzoïn éthyl éther, le benzoïn isopropyl éther et le benzoïn isobutyl éther ;
- les thioxanthones, comme la thioxanthone, la 2,4-diéthylthioxanthone, l'acide thioxanthone-1-sulfonique, l'isopropyl-thioxanthone-4 sulfonique, l'isopropylthioxanthone et la 2-chlorothioxanthone ;
- les benzophénones, comme la benzophénone, la 4,4'-bis(dimethylamino)benzophénone, la 4,4'-bis(diéthylamino) benzophénone, la 4,4'-diéthylaminobenzophénone, la cétone de Mischler ;
- les propiophénones, comme la 2-hydroxy-2-méthylpropiophénone, la 4'-isopropyl-2-hydroxy-2-méthyl-propiophénone ;
- les acétophénones, comme l'acétophénone, la p-diméthylaminoacétophénone, l'$\alpha$,$\alpha$'-diméthoxyacétoxyacétophénone, la 2,2-diméthoxy-2-phénylacétophénone, la p-méthoxyacétophénone, la 2-méthyl-[4-(méthylthio)phényl]-2-morpholino-1-propanone, la 2,2-diéthoxyacétophénone, la 4'-phénoxy-2,2-dichloroacétophénone, la 2-benzyl-2-N,N-diméthylamino-1-(4-morpholinophényl)-butanone-1, la 2,2-diméthoxy-2-phényl-açétophénone, la 2-hydroxy-2-méthyl-1-phénylpropanone ;
- les quinones, comme l'anthraquinone, la 2-éthylanthraquinone, la 2-chloroanthraquinone, la 1,4-naphtoquinone ;
- les alpha-hydroxyarylcétones, comme la 1-hydroxycyclohexyl phényl cétone ;
- les composés halogénés, tels que le chlorure de phénacyle, la tribromométhylphénylsulfone, la tris(trichlorométhyl)-s-triadine ;
- les peroxydes comme le peroxyde de di-t-butyle ; et
- d'autres composés comme le benzile diméthyl cétal ; le N,N-diméthylaminobenzoate d'isoamyle, le N,N-diméthylaminobenzoate d'éthyle, le benzoïn benzoate, la 2-hydroxy-2-méthyl-1-phényl propanone, l'$\alpha$-acyloxime ester.

Ces composés peuvent être utilisés soit individuellement en tant que photoinitiateur, soit sous la forme d'un mélange d'au moins deux d'entre eux en tant que système photoinitiateur. Par ailleurs, au photoinitiateur ou au système photoinitiateur, peut être associé au moins un agent photoactivateur.

Les compositions selon l'invention peuvent en outre comprendre au moins l'un parmi un diluant réactif monomère ou oligomère, un solvant ou diluant non réactif, et un additif usuel tel qu'un pigment.

Comme diluant réactif monomère ou oligomère, on peut citer des monomères vinyliques, tels que l'acétate de vinyle, le styrène, le vinyl toluène, le divinyl benzène ; des esters acryliques et méthacryliques, tels que le (méth) acrylate de méthyle, le (méth)acrylate d'éthyle, le (méth)acrylate d'isopropyle, le (méth)acrylate de n-butyle, le (méth) acrylate d'isobutyle, le (méth)acrylate de 2-éthylhexyle, le (méth)acrylate de 2-hydroxyéthyle, le (méth)acrylate de glycidyle, le di(méth)acrylate d'éthylène glycol, le (di)méthacrylate de diéthylène glycol, le di(méth)acrylate de tétraéthylène glycol, le di(méth)acrylate de glycérol, le tri(méth)acrylate de glycérol, le di(méth)acrylate de 1,3-propylène glycol, le di(méth)acrylate de dipropylène glycol, le di(méth)acrylate de tripropylène glycol, le di(méth)acrylate de 1,4-butanediol, le tri(méth)acrylate de 1,2,4-butanetriol, le di(méth)acrylate de 1,6-hexanediol, le di(méth)acrylate de 1,4-cyclohexanediol, le di(méth)acrylate de 1,4-benzènediol, le tétra(méth)acrylate de pentaérythritol, le di(méth) acrylate de 1,5-pentanediol, le di(méth)acrylate de triméthylolpropane, le tri(méth)acrylate de triméthylolpropane, le 2,2-diméthyl-3-hydroxypropyl-2,2-diméthyl-3-hydroxypropionate, le (méth)acrylate d'isobornyle et le (méth)acrylate de tétrahydrofurfuryle ; des (méth)acrylates issus de glycidyl éthers aromatiques tels que le bisphénol A - diglycidyl éther et de glycidyl éthers aliphatiques tels que le butanediol diglycidyl éther, des exemples spécifiques de ceux-ci comprenant le 1,4-butanediol diglycidyléther di(méth)acrylate, le bisphénol A - diglycidyléther di(méth)acrylate et le néopentylglycol diglycidyléther di(méth)acrylate ; et des amides acryliques ou méthacryliques tels que le (méth)acrylamide, le diacétone (méth)acrylamide, le N(bêta-hydroxyéthyl) (méth)acrylamide, le N,N-bis(bêta-hydroxyéthyl) (méth)acrylamide, le méthylène bis(méth)acrylamide, le 1,6-hexaméthylène bis(méth)acrylamide, le diéthylènetriamine tris(méth) acrylamide, le bis(gamma-(méth)acrylamidepropoxy) éthane et le bêta-(méth)acrylamide éthylacrylate.

Comme solvant ou diluant non réactif, on peut citer l'acétate d'éthyle, l'acétate de butyle, le méthoxypropanol, l'isopropanol, la méthyl éthyl cétone, l'acétone.

Les pigments sont notamment le bleu de phtalocyanine et le dioxyde de titane.

On peut également placer la composition sous la forme d'une émulsion dans l'eau ou d'une dispersion dans l'eau.

Si on le désire, les compositions de la présente invention sont stabilisées. La stabilisation de la formulation est réalisée à l'aide d'un ou de plusieurs inhibiteurs de polymérisation radicalaire mis en oeuvre dans les quantités classiques et choisis notamment parmi les inhibiteurs de type phénolique, les quinones, la phénothiazine et ses dérivés, les composés porteurs de radicaux nitroxyles, les amines à encombrement stérique, les composés nitro aromatiques, les composés à fonction nitroso ou N-nitroso, les phosphites, les thioéthers. Comme exemples d'inhibiteurs de type phénolique, on peut citer entre autres l'hydroquinone, l'éther monométhylique de l'hydroquinone, l'ortho tertiobutyl phénol, le 2,6-ditertiobutylphénol, le 2,6-ditertiobutyl paranitroso phénol, le paracrésol, le 2,6-ditertiobutyl paracrésol

et le 2,6-ditertiobutyl paraméthoxy phénol.

La présente invention porte également sur un procédé de revêtement comprenant l'application sur un substrat d'un film d'une composition polymérisable et/ou réticulable par la lumière ultraviolette ou visible telle que définie ci-dessus et le durcissement de ladite composition par exposition dudit film à la lumière ultraviolette ou visible. En particulier, on conduit le durcissement de ladite composition jusqu'à un état non poisseux.

Les compositions de revêtement selon l'invention peuvent être appliquées sur les substrats les plus divers : bois, papier, panneaux d'agglomérés, panneaux de particules, métaux, métaux revêtus d'un primaire, verre, matières plastiques, matières plastiques métallisées. L'application du film de composition sur le substrat peut être effectuée par immersion, pulvérisation, revêtement au rouleau, machine à rideau, etc.

Lorsque les compositions de revêtement sont destinées à être durcies par la lumière ultraviolette, on utilise n'importe quelle source appropriée qui émet une lumière ultraviolette ayant une longueur d'onde de 180-400 nm, telle que arcs de mercure, arcs de carbone, lampes à mercure basse pression ou moyenne pression ou haute pression, arcs à plasma à écoulement rotationnel et diodes électroluminescentes à lumière ultraviolette. La puissance de ces lampes à longs tubes est de l'ordre de 80-240 watts par cm de longueur de tube. Généralement, on fait se déplacer le substrat revêtu d'un film mince de la composition au-dessous d'une ou plusieurs des lampes précitées, à une vitesse comprise entre 1 et 300 mètres par minute.

Des lampes appropriées pour conduire cette polymérisation sans promoteur de photodurcissement sont, par exemple, les lampes F300 Bulb D ou H, F450 Bulb D, F600 Bulb D ou H ou Excimer, commercialisées par la Société FUSION.

La présente invention porte également sur les compositions polymérisées et/ou réticulées obtenues par réticulation des compositions telles que définies ci-dessus, ainsi que sur les substrats revêtus par un film durci obtenu par durcissement d'une composition polymérisable et/ou réticulable par la lumière ultraviolette ou visible telle que définie ci-dessus.

Les exemples suivants illustrent la présente invention sans toutefois en limiter la portée.

<u>Exemple de synthèse 1</u>

A une solution refroidie à 5°C d'anhydride maléique (1 mole) dans l'acétone (200 ml), on ajoute lentement 1 mole d'isopropanolamine. Après avoir agité le mélange pendant 2 h à température ambiante, on évapore l'acétone. On ajoute alors 600 ml de toluène et 4 moles d'anhydride maléique. On porte au reflux (110°C) pendant 4 h, puis on évapore le toluène. A 30 g du mélange obtenu, on ajoute 14,7 g de propylèneglycol, 200 ppm d'hydroquinone et 15 ppm de naphténate de cuivre. On chauffe dans un premier temps à 160°C, puis à 200°C, en éliminant l'eau de condensation, la fin de la réaction étant réalisée sous pression réduite. La réaction est arrêtée lorsqu'un indice d'acide de 60 mg KOH/g est atteint. La masse moléculaire moyenne en nombre du prépolymère résultant, déterminée par GPC (étalon polystyrène), est de 1875. Le prépolymère contient 0,36 mole de fonctions maléimide par kg de résine.

<u>Exemple de synthèse 2</u>

A une solution refroidie à 5°C d'anhydride maléique (19,6 g) dans l'acétone (30 ml), on ajoute lentement 15 g d'isopropanolamine. Après avoir agité le mélange pendant 2h à température ambiante, on évapore l'acétone. On ajoute alors 100 ml de toluène, 78,4 g d'anhydride maléique et 0,7 g de chlorure de zinc. On porte au reflux pendant 3h puis on évapore le toluène. A 60 g du mélange obtenu, on ajoute 32,2 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 49 mg KOH/g est atteint. La masse moyenne en nombre du prépolymère résultant, déterminée par GPC (étalon polystyrène) est de 1249. Le prépolymère contient 0,54 mole de fonctions maléimide par kg de résine.

<u>Exemple de synthèse 3</u>

A une solution refroidie à 5°C d'anhydride maléique (49 g) dans l'acétone (75 ml), on ajoute lentement 37,5 g d'isopropanolamine. Après avoir agité le mélange pendant 2h à température ambiante, on évapore l'acétone. On ajoute alors 250 ml de toluène, 196 g d'anhydride maléique et 8,2 g d'acétate de sodium. On porte au reflux pendant 4h puis on évapore le toluène. A 70 g du mélange obtenu, on ajoute 32,3 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 49 mg KOH/g est atteint. La masse moyenne en nombre du prépolymère résultant, déterminée par GPC (étalon polystyrène) est de 1382.

Exemple de synthèse 4

A une solution à 5°C d'anhydride maléique (1 mole) dans 200 ml d'acétone, on additionne lentement une mole de furane, puis on agite 12 h à température ambiante. On ajoute alors de l'acétone pour solubiliser totalement le produit d'addition. A la solution refroidie à 5°C, on ajoute lentement 1 mole d'isopropanolamine. Après avoir agité le mélange pendant 2 h à température ambiante, on évapore l'acétone. On ajoute alors 600 ml de toluène et 4 moles d'anhydride maléique. On porte au reflux pendant 4 h, puis on évapore le solvant. A 30 g du mélange obtenu, on ajoute 15,2 g de propylène glycol, 200 ppm d'hydroquinone et 15 ppm de naphténate de cuivre. On chauffe dans un premier temps à 160°C, puis à 200°C en éliminant l'eau de condensation, la fin de la réaction étant réalisée sous pression réduite. La réaction est arrêtée lorsqu'un indice d'acide de 40 mg KOH/g est atteint. La masse moléculaire moyenne en nombre du prépolymère résultant, déterminée par GPC (étalon polystyrène), est de 1951.

Exemple de synthèse 5

La synthèse est conduite de la même manière que dans l'exemple de synthèse 1 pour les deux premières étapes. A 110 g du mélange obtenu après évaporation du toluène, on ajoute 84,6 g de diéthylène glycol, 15 ppm de naphténate de cuivre et 200 ppm d'hydroquinone. On chauffe alors à 180-200°C en éliminant l'eau de condensation, la fin de la réaction étant conduite sous pression réduite. La réaction est arrêtée lorsqu'un indice d'acide de 38 mg KOH/g est atteint. La masse moyenne en nombre du prépolymère résultant, déterminée par GPC (étalon polystyrène), est de 1362.

Exemple de Synthèse 6 :

A une solution d'anhydride maléique (0,6 mole) dans 170 ml de toluène, on ajoute 0,3 mole d'éthanolamine. La solution est chauffée pendant 2 h à 80°C. On ajoute alors 300 ml de toluène et 0,9 mole d'anhydride maléique. On porte au reflux pendant 4 h et on évapore le solvant. On ajoute 1 mole de propylène glycol, 200 ppm d'hydroquinone et 15 ppm de naphténate de cuivre. On chauffe à 160°C puis à 200°C en éliminant l'eau de condensation, la fin de la réaction étant conduite sous pression réduite. La réaction est arrêtée lorsqu'un indice d'acide de 44 mg KOH/g est atteint. La masse moléculaire moyenne en nombre du prépolymère résultant, déterminée par GPC (étalon polystyrène) est de 1248.

Exemple de Synthèse 7 :

On dissout 1,4 mole d'anhydride maléique dans 300 ml de chloroforme à 60°C. On arrête le chauffage, on démarre l'addition goutte à goutte de la 2-méthyl-1,5-pentaméthylène diamine (0,7 mole) et on agite pendant 3 heures à température ambiante après que l'addition soit terminée. Le solvant est alors évaporé. A 0,07 mole du produit de réaction obtenu, on ajoute 0,21 mole d'anhydride maléique, 50 ml de toluène, on porte au reflux pendant 4 h puis on évapore le solvant. A 35 g du mélange obtenu, on ajoute 15,4 g de propylène glycol, 200 ppm d'hydroquinone et 15 ppm de naphténate de cuivre. On chauffe à 160°C puis à 200°C en éliminant l'eau de condensation, la fin de la réaction étant conduite sous pression réduite. La réaction est arrêtée lorsqu'un indice d'acide de 58 mg KOH/g est atteint. La masse moyenne en nombre du prépolymère résultant, déterminée par GPC (étalon polystyrène) est de 1308. Le prépolymère contient 1,20 mole de fonctions maléimide par kg de résine.

Exemple de synthèse 8

A une solution à 60°C de 117,1 g de valine dans 150 ml de THF, on ajoute lentement 98 g d'anhydride maléique dissous dans 50 ml de THF. Après 7h d'agitation à 60°C, on évapore le solvant. A 20,3 g du mélange obtenu, on ajoute 27,7 g d'anhydride maléique, 150 ml de toluène, on porte au reflux pendant 4h puis on évapore le solvant. A 44,0 g du mélange obtenu, on ajoute 25,6 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 36 mg KOH/g est atteint. La masse moyenne en nombre du prépolymère résultant, déterminée par GPC (étalon polystyrène), est de 1438.

Exemple de Synthèse 9 :

La synthèse est conduite de la même manière que dans l'Exemple de Synthèse 1 pour les deux premières étapes. A 300 g du mélange obtenu après évaporation du toluène, on ajoute 75 g de propylène glycol, 104,7 g de diéthylène glycol, 200 ppm d'hydroquinone et 15 ppm de naphténate de cuivre. On chauffe alors à 180°C puis à 200°C

en éliminant l'eau de condensation, la fin de la réaction étant conduite sous pression réduite. La réaction est arrêtée lorsqu'un indice d'acide de 45 mg KOH/g est atteint. La masse moléculaire moyenne en nombre du prépolymère résultant, déterminée par GPC (étalon polystyrène) est de 2689.

Exemple de Synthèse 10 :

A une solution refroidie à 5°C d'anhydride maléique (0,26 mole) dans l'acétone (50 ml), on ajoute lentement 0,26 mole d'isopropanolamine. Après avoir agité le mélange pendant 2 h à température ambiante, on évapore l'acétone. On ajoute 150 ml de toluène et 1,04 mole d'anhydride succinique. On porte au reflux pendant 4 h puis on évapore le toluène. On ajoute 0,82 mole de propylène glycol, 200 ppm d'hydroquinone et 15 ppm de naphténate de cuivre. On chauffe à 160°C puis à 200°C en éliminant l'eau de condensation, la fin de la réaction était conduite sous pression réduite. La réaction est arrêtée lorsqu'un indice d'acide de 60 mg KOH/g est atteint. La masse moléculaire moyenne en nombre du prépolymère résultant, déterminée par GPC (étalon polystyrène) est de 1166.

Exemple de Synthèse 11

A une solution refroidie à 5°C d'anhydride maléique (0,5 mole) dans 100 ml d'acétone, on additionne lentement 0,5 mole d'isopropanolamine. Après avoir agité le mélange pendant 2 heures à température ambiante, on évapore l'acétone. On ajoute alors 300 ml d'éthanol, on porte au reflux pendant 4 heures et on évapore l'éthanol. A 66 g du produit obtenu on ajoute 15,7 g d'anhydride maléique, 12,8 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 40 mg KOH/g est atteint. La masse moyenne en nombre du prépolymère résultant, déterminée par GPC (étalon polystyrène) est de 1451.

Exemple de synthèse 12

A 18,4 g d'anhydride maléique à 65°C, on ajoute lentement 2,82 g d'isopropanolamine puis on porte à 100°C pendant 2h. On ajoute alors 11 g de propylène glycol, 15 ppm de naphténate de cuivre et 200 ppm d'hydroquinone et on chauffe à 180-200°C en éliminant l'eau de condensation, la fin de la réaction étant conduite sous pression réduite. La réaction est arrêtée lorsqu'un indice d'acide de 48 mg KOH/g est atteint. La masse moyenne en nombre du prépolymère résultant, déterminée par GPC (étalon polystyrène), est de 1857.

Exemple de synthèse 13

A 36,75 g d'anhydride de maléique à 65°C, on ajoute lentement 5,63 g d'isopropanolamine. On porte le mélange à 80°C pendant 1h, à 100°C pendant 1h et à 120°C pendant 2h. On ajoute alors 20,8 g de propylène glycol, 15 ppm de naphténate de cuivre et 200 ppm d'hydroquinone et on chauffe à 180-200°C en éliminant l'eau de condensation, la fin de la réaction étant conduite sous pression réduite. La réaction est arrêtée lorsqu'un indice d'acide de 58 mg KOH/g est atteint. La masse moyenne en nombre du prépolymère résultant, déterminée par GPC (étalon polystyrène), est de 1313. Le prépolymère contient 0,49 mole de fonctions maléimide par kg de résine.

Exemple de synthèse 14

A 24,5 g d'anhydride maléique à 65°C, on ajoute 15 ppm de naphténate de cuivre, 200 ppm d'hydroquinone puis lentement 3,75 g d'isopropanolamine. On porte à 80°C pendant 30 mn, à 100°C pendant 1h puis à 120°C pendant 1h. On ajoute alors 30,7 g de 2-butyl-2-éthyl-1,3-propanediol et on chauffe à 180-200°C en éliminant l'eau de condensation, la fin de la réaction étant conduite sous pression réduite. La réaction est arrêtée lorsqu'un indice d'acide de 38 mg KOH/g est atteint. La masse moyenne en nombre du prépolymère résultant, déterminée par GPC (étalon polystyrène), est de 1555.

Exemple de synthèse 15

A 98 g d'anhydride maléique à 60°C, on ajoute lentement 15 g d'isopropanolamine. Lorsque l'addition est terminée, on chauffe pendant 2 h à 120°C. A 60,5 g du mélange obtenu on ajoute 37 g de propylèneglycol, 15 ppm de naphténate de cuivre et 200 ppm d'hydroquinone. On chauffe à 180°C en éliminant l'eau de condensation, la fin de la réaction étant conduite sous pression réduite. La réaction est arrêtée lorsqu'un indice d'acide de 12 mg de KOH/g est atteint. A 23,7 g du polymère obtenu porté à 115°C, on ajoute 1,36 g de phényl glycidyl éther et 25 mg de chlorure de benzyltriéthylammonium. Après 2 h d'agitation à 130°C, le prépolymère présente un indice d'acide de 1,5 mg KOH/g.

Exemple de synthèse 16

A 31,3 g du prépolymère préparé à l'Exemple de synthèse 15 (présentant un indice d'acide de 12 mg KOH/g) on ajoute, à 105°C, 1,55 g d'allylglycidyléther. On monte progressivement la température de 105 à 140°C sur une durée de 2h45mn. Le prépolymère obtenu présente alors un indice d'acide de 2 mg KOH/g.

Exemple de Synthèse 17

A un mélange à 60°C d'anhydride maléique (24,5 g) et de propylène glycol (14,6 g) contenant 15 ppm de naphténate de cuivre et 200 ppm d'hydroquinone, on ajoute 3,75 g d'isopropanolamine. On chauffe alors à 160 puis 200°C en éliminant l'eau de condensation, la fin de la réaction étant conduite sous pression réduite. La réaction est arrêtée pour un indice d'acide de 45 mg KOH/g. La masse moyenne en nombre du prépolymère résultant, déterminée par GPC (étalon polystyrène) est de 1319. Le prépolymère contient 0,48 mole de fonctions maléimide par kg de résine.

Exemple de synthèse 18

A 98 g d'anhydride maléique à 60°C, on ajoute lentement 15 g d'isopropanolamine. On porte à 80°C pendant 30 mn, à 100°C pendant 30 mn puis à 120°C pendant 1h. A 111 g du mélange obtenu on ajoute 108,3 g de propylèneglycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 24 mg KOH/g est atteint. A 30 g du mélange obtenu, on ajoute 3,5 g de triméthylhexaméthylène diisocyanate et on chauffe pendant 2 h à 70°C. La réaction est arrêtée lorsqu'un indice d'hydroxyle de 160 mg KOH/g est atteint. La masse moyenne en nombre du prépolymère résultant, déterminée par GPC (étalon polystyrène), est de 1534.

Exemple de synthèse 19

A 36,7 g d'anhydride de maléique à 60°C, on ajoute lentement 4,58 g d'éthanolamine. Lorsque l'addition est terminée, on chauffe pendant 2 h à 120°C. On ajoute alors 24,88 g d'éthylène glycol, 200 ppm d'hydroquinone et 100 ppm d'un catalyseur d'estérification à base d'étain. On chauffe à 180°C en éliminant l'eau de condensation, la fin de la réaction étant conduite sous pression réduite. La réaction est arrêtée lorsqu'un indice d'acide de 2 mg de KOH/g est atteint. A 100 g du polymère obtenu porté à 140°C, on ajoute 1,5 équivalent par fonction acide carboxylique résiduel d'un époxy monofonctionnel ainsi qu'un catalyseur de la réaction époxy/acide carboxylique. Après 0,5 h à 140°C, on obtient un prépolymère présentant un indice d'acide inférieur à 0,5 mg KOH/g et une masse moyenne en nombre (déterminée par GPC, étalon polystyrène) de 1100. Le prépolymère contient 0,46 mole de fonction maléimide par kg de résine.

Exemple de Synthèse 20

A une solution refroidie à 5°C d'anhydride maléique (1 mole) dans l'acétone (200 ml), on ajoute lentement 1 mole d'isopropanol amine. Après avoir agité le mélange pendant 2 h à température ambiante, on évapore l'acétone. On ajoute alors 600 ml de toluène et 4 moles d'anhydride maléique. On porte au reflux pendant 4 h puis on évapore le toluène. A 25 g du mélange obtenu, on ajoute 40,2 g de polyoxypropylène diamine, 20 ml de xylène, 300 ppm d'hydroquinone et on chauffe à 180°C en éliminant l'eau de condensation, la fin de la réaction étant conduite sous pression réduite. La réaction est arrêtée pour un indice d'acide de 69 mg KOH/g. La masse moyenne en nombre du prépolymère résultant, déterminée par GPC (étalon polystyrène) est de 1063.

Dans tous les exemples de synthèse 1 à 20, la RMN $^{13}C$ a permis de mettre en évidence la présence de groupements maléimide.

Dans tous les exemples d'application qui suivent, sauf indication contraire, les formulations sont appliquées sur verre à l'aide d'une barre "K hand coater" de manière à obtenir un film d'une épaisseur de 12 µm. Lorsque le durcissement est effectué par la lumière ultraviolette, la lampe utilisée sauf indication contraire est une lampe F450 (H-bulb) de puissance 120 W/cm commercialisée par la Société FUSION. La dureté est mesurée après 24 h à température ambiante.

Exemple d'Application 1 :

A 67,05 g du prépolymère obtenu à l'Exemple de synthèse 1, on ajoute 32,95 g de butanedioldivinyléther (BDVE). Un film présentant une dureté crayon de H est obtenu après 1 passage sous la lampe à 54 m/mn. 4 passages à 35 m/mn conduisent à une dureté de 3H.

Exemple d'Application 2 :

A 58,8 g du prépolymère obtenu à l'Exemple de synthèse 1, on ajoute 41,2 g de triéthylène glycoldivinyléther (Rapicure® DVE-3, ISP). Un film présentant une dureté crayon de 4H est obtenu après 4 passages sous la lampe à 35 m/mn.

Exemple d'Application 3 :

A 60,3 g du prépolymère obtenu à l'Exemple de synthèse 1, on ajoute 29,7 g de BDVE et 10 g de triméthylolpropanetriacrylate (SR351). Un film présentant une dureté crayon de 3H est obtenu après 2 passages sous la lampe à 35 m/mn.

Exemple d'Application 4 :

A 67,05 g du prépolymère obtenu à l'Exemple de synthèse 4, on ajoute 32,95 g de BDVE. Un film présentant une dureté crayon de 3H est obtenu après 2 passages sous la lampe à 35 m/mn. 4 passages à 35 m/mn conduisent à une dureté de 5H.

Exemple d'Application 5 :

A 67,3 g du prépolymère obtenu à l'Exemple de synthèse 6, on ajoute 32,7 g de BDVE. Un film présentant une dureté crayon de 2H est obtenu après 2 passages sous la lampe à 100 m/mn. 2 passages à 54 m/mn conduisent à une dureté de 3H.

Exemple d'Application 6 :

A 62,1 g du prépolymère obtenu à l'Exemple de synthèse 6, on ajoute 32,9 g de BDVE et 20 g de N-phényl maléimide. Un film présentant une dureté crayon de 3H est obtenu après 1 passage sous la lampe à 35 m/mn.

Exemple d'Application 7 :

A 68,1 g du prépolymère obtenu à l'Exemple de synthèse 7, on ajoute 31,9 g de BDVE. Un film présentant une dureté crayon > 7H est obtenu après 2 passages sous la lampe à 54 m/mn.

Exemple d'Application 8 :

A 69 g du prépolymère obtenu à l'Exemple de synthèse 9, on ajoute 31 g de BDVE. Un film présentant une dureté crayon de 3H est obtenu après 1 passage sous la lampe à 35 m/mn.

Exemple d'Application 9 :

A 61 g du prépolymère obtenu à l'Exemple de synthèse 9, on ajoute 39 g de DVE-3. Un film présentant une dureté crayon de HB est obtenu après 4 passages sous la lampe à 35 m/mn.

Exemple d'Application 10 :

A 59,7 g du prépolymère obtenu à l'Exemple de synthèse 17, on ajoute 15,3 g de BDVE et 25 g de triméthylolpropane triacrylate (SR 351). Un film présentant une dureté crayon de 5B est obtenu après 7 passages sous la lampe à 10 m/mn.

Exemple d'Application 11 :

A 69,5 g du prépolymère obtenu à l'Exemple de synthèse 15, on ajoute 30,5 g de BDVE. Un film présentant une dureté crayon de H est obtenu après 1 passage sous la lampe à 54 m/mn.

Exemple d'Application 12 :

A 67,3 g du prépolymère obtenu à l'Exemple de synthèse 11, on ajoute 32,7 g de BDVE. Un film présentant

une dureté crayon de 3H est obtenu après 2 passages sous la lampe à 54 m/mn.

Exemple d'Application 13 :

A 75,8 g du prépolymère obtenu à l'Exemple de synthèse 17, on ajoute 24,2 g de BDVE. Un film présentant une dureté crayon de 4H est obtenu après 4 passages sous la lampe à 54 m/mn.

Exemple d'Application 14 :

A 67 g du prépolymère obtenu à l'Exemple de synthèse 1, on ajoute 33 g de BDVE, 0,5 g de Darocure® 1173 et 0,5 g d'Irgacure® 186. Un film présentant une dureté crayon de 4H est obtenu après 1 passage sous la lampe à 54 m/mn.

Exemple d'Application 15 :

A 67,3 g du prépolymère obtenu à l'Exemple de synthèse 6, on ajoute 32,7 g de BDVE et 0,1 g de Darocure® 1173. Un film présentant une dureté crayon de 4H est obtenu après 2 passages sous la lampe à 54 m/mn.

Exemple d'Application 16 :

A 67,3 g du prépolymère obtenu à l'Exemple de synthèse 6, on ajoute 32,7 g de BDVE et 1,0 g de Darocure® 1173. Un film présentant une dureté crayon de 3H est obtenu après 1 passage sous la lampe à 100 m/mn.

Exemple d'Application 17 :

A 70 g du prépolymère obtenu à l'Exemple de synthèse 6, on ajoute 30 g d'hexanediol diacrylate (SR238) et 0,5 g de Darocure® 1173. Un film présentant une dureté crayon de HB est obtenu après 3 passages sous la lampe à 54 m/mn.

Exemple d'Application 18 :

A 69 g du prépolymère obtenu à l'Exemple de synthèse 9, on ajoute 31 g de BDVE, 0,5 g de Darocure® 1173 et 0,5 g d'Irgacure® 184 (Ciba-Geigy). Un film présentant une dureté crayon de 4H est obtenu après 2 passages sous la lampe à 100 m/mn.

Exemple d'Application 19 :

A 69 g du prépolymère obtenu à l'Exemple de synthèse 9, on ajoute 31 g de BDVE et 1 g de Darocure® 1173 (Ciba-Geigy). Un film présentant une dureté crayon de H est obtenu après 2 passages sous la lampe à 100 m/mn.

Exemple d'Application 20 :

A 66,2 g du prépolymère obtenu à l'Exemple de synthèse 9, on ajoute 29,8 g de BDVE, 1 g de Darocure® 1173, 4 g de benzophénone et 1 g d'amine acrylée (CN 386). Un film présentant une dureté crayon de 2H est obtenu après 2 passages sous la lampe à 100 m/mn.

Exemple d'Application 21 :

A 59,7 g du prépolymère obtenu à l'Exemple de synthèse 17, on ajoute 15,3 g de BDVE, 25 g de triméthylolpropane triacrylate (SR 351) et 2 g de Darocure® 1173. Un film présentant une dureté crayon de 2B est obtenu après 1 passage sous la lampe à 10 m/mn.

Exemple d'Application 22

A 37,3 g du prépolymère obtenu à l'Exemple de synthèse 1, on ajoute 53,2 g de triéthylèneglycol divinyl éther et 9,5 g de pigment jaune diarylide 13. La formulation est appliquée à l'aide d'une barre "K handcoater" sous la forme d'un film de 6 µm d'épaisseur et la réticulation est effectuée à l'aide d'une lampe moyenne Hg/Xe de puissance 80 watts/cm. Un film sec parfaitement réticulé est obtenu après 4 passages sous la lampe à 30 m/mn.

Exemple d'Application 23

Un résultat identique à l'Exemple 22 est obtenu en utilisant comme pigment le bleu de phtalocyanine (forme β).

Exemples d'Application Comparatifs :

Les cinq exemples comparatifs ci-après ont été réalisés avec une résine polyester insaturée obtenue par estérification à 200°C sous pression atmosphérique puis sous pression réduite (200 mbars) d'un mélange contenant 24,5 g d'anhydride maléique, 20,9 g de propylèneglycol, 15 ppm de naphténate de cuivre et 200 ppm d'hydroquinone. La résine obtenue présente un indice d'acide de 45 mg KOH/g et une masse moyenne en nombre déterminée par GPC (étalon polystyrène) de 1913.

Exemple d'Application Comparatif 1 :

A 69 g de la résine polyester obtenue ci-dessus, on ajoute 31 g de BDVE. Un film présentant une dureté crayon de 4H est obtenu après 9 passages sous la lampe à 54 m/mn.

Exemple d'Application Comparatif 2 :

A 58,1 g de la résine polyester obtenue ci-dessus, on ajoute 31,5 g de BDVE et 10,4 g de N-phénylmaléimide. Un film présentant une dureté crayon de H est obtenu après 10 passages sous la lampe à 100 m/mn. 6 passages à 54 m/mn conduisent à une dureté de H.

Exemple d'Application Comparatif 3 :

A 56,5 g de la résine polyester obtenue ci-dessus, on ajoute 30,6 g de BDVE et 12,9 g de N-cyclohexylmaléimide. Un film présentant une dureté crayon de 3H est obtenu après 6 passages sous la lampe à 100 m/mn.

Exemple d'Application Comparatif 4 :

A 69 g de la résine polyester obtenue ci-dessus, on ajoute 31 g de BDVE et 0,1 g de Darocure® 1173. Un film présentant une dureté crayon de 3H est obtenu après 4 passages sous la lampe à 54 m/mn.

Exemple d'Application Comparatif 5 :

A 58,1 g de la résine polyester obtenue ci-dessus, on ajoute 31,5 g de BDVE, 10,4 g de N-phénylmaléimide et 1 g de Darocure® 1173. Un film présentant une dureté crayon de 3H est obtenu après 5 passages sous la lampe à 35 m/mn.

Les deux exemples comparatifs ci-après ont été réalisés avec une résine polyester insaturée obtenue par estérification à 200°C sous pression atmosphérique puis sous pression réduite (200 mbars) d'un mélange contenant 50 g d'anhydride maléique, 21,3 g de propylèneglycol, 29,7 g de diéthylèneglycol, 15 ppm de naphténate de cuivre et 200 ppm d'hydroquinone. La résine obtenue présente un indice d'acide de 49 mg KOH/g et une masse moyenne en nombre déterminée par GPC (étalon polystyrène), de 1070.

Exemple d'Application Comparatif 6 :

A 71,7 g de la résine obtenue ci-dessus, on ajoute 28,3 g de BDVE. Après 8 passages sous la lampe à 35 m/mn, on obtient un film collant qui présente une dureté crayon < 6B.

Exemple d'Application Comparatif 7 :

A 64,1 g de la résine obtenue ci-dessus, on ajoute 35,9 g de DVE-3. Après 11 passages sous la lampe à 35 m/mn, on obtient un film collant qui présente une dureté crayon < 6B.

Dans le Tableau I ci-après, sont indiquées les doses UV minimales en $J/cm^2$ (mesurées à l'aide d'un radiomètre UV Power Puck de la Société EIT) pour obtenir un film non collant dans le cas de certains Exemples d'Application de l'invention et des Exemples d'Application Comparatifs qui leur correspondent.

Tableau I

| Prépolymère à fonctions maléimide | | | Prépolymère non fonctionnalisé | | |
|---|---|---|---|---|---|
| Exemple d'Application n' | Dose UV (J/cm$^2$) | Dureté | Exemple d'Application comparatif n° | Dose UV (J/cm$^2$) | Dureté |
| 1 ou 11 | 0,19 | H | 1<br>2<br>3 | 1,71<br>1,14<br>0,77 | 4H<br>H<br>3H |
| 15<br>16 | 0,38<br>0,128 | 4H<br>3H | 4<br>5 | 0,76<br>1,43 | 3H<br>3H |
| 8<br>9 | 0,29<br>1,15 | 3H<br>HB | 6<br>7 | 2,30<br>3,16 | <6B<br><6B |

Exemple d'Application 24 :

A 67,9 g du prépolymère obtenu à l'Exemple de synthèse 19, on ajoute 32,1 g de DVE-3. Un film présentant une dureté crayon de HB est obtenu après 4 passages sous la lampe à 20 m/mn. Cinq passages à 8 m/mn conduisent à une dureté crayon de 2H.

Exemple d'Application 25 :

A 67,9 g du prépolymère obtenu à l'Exemple de synthèse 19, on ajoute 32,1 g de DVE-3, 0,5 g de Darocure® 1173 et 0,5 g d'Irgacure® 184. Un film présentant une dureté crayon de 4H est obtenu après 2 passages sous la lampe à 54 m/mn.

Les quatre exemples comparatifs 8 à 11 ci-après ont été réalisés avec le polymère dont la préparation est décrite ci-dessous.

Un mélange constitué de 49 g d'anhydride maléique, 42,5 g d'éthylène glycol, 200 ppm d'hydroquinone et 1000 ppm d'un catalyseur d'estérification à base d'étain est progressivement porté à 200°C. L'eau de condensation est éliminée d'abord à pression atmosphérique puis sous pression réduite. La résine obtenue présente un indice d'acide de 1 mg KOH/g.

A 61 g de cette résine, on ajoute 1,5 équivalent par fonction acide carboxylique résiduelle d'un époxy monofonctionnel ainsi qu'un catalyseur de la réaction époxy/acide carboxylique. Après 0,5 h à 140°C, on obtient un prépolymère qui présente un indice d'acide inférieur à 0,5 mg KOH/g et une masse moyenne en nombre (déterminée par GPC, étalon polystyrène) de 1000.

Exemple d'Application comparatif 8 :

A 62,4 g du prépolymère comparatif obtenu ci-dessus, on ajoute 37,6 g de DVE-3. Un film sec présentant une dureté crayon de 2B est obtenu après 15 passages sous la lampe à 20 m/mn. Cinq passages à 8 m/mn conduisent à une dureté crayon < 7B.

Exemple d'Application Comparatif 9 :

A 62,4 g du prépolymère comparatif obtenu ci-dessus, on ajoute 37,6 g de DVE-3, 0,5 g de Darocure® 1173 et 0,5 g d'Irgacure® 184. Un film présentant une dureté crayon de 4H est obtenu après 4 passages sous la lampe à 54 m/mn.

Exemple d'Application Comparatif 10 :

A 54,3 g du prépolymère comparatif obtenu ci-dessus, on ajoute 38,3 g de DVE-3 et 7,4 g de N-hydroxyéthyl maléimide. Un film présentant une dureté crayon de 4B est obtenu après 11 passages sous la lampe à 20 m/mn. Cinq passages à 8 m/mn conduisent à une dureté crayon de 2B.

Exemple d'Application Comparatif 11 :

A 54,3 g du prépolymère comparatif obtenu ci-dessus, on ajoute 38,3 g de DVE-3, 7,4 g de N-hydroxyéthyl maléimide, 0,5 g de Darocure® 1173 et 0,5 g d'Irgacure® 184. Un film présentant une dureté crayon de 4H est obtenu après 4 passages sous la lampe à 54 m/mn.

Des résultats supplémentaires sont donnés dans les Tableaux II à IV ci-après.

Tableau II :

| Dose UV minimum nécessaire pour obtenir un film non collant en l'absence de photoinitiateur | | | |
|---|---|---|---|
| | Prépolymère à fonctions maléimide | Prépolymère non fonctionnalisé | Prépolymère non fonctionnalisé + Maléimide libre |
| Exemple d'Application n° | 24 | Comparatif 8 | Comparatif 10 |
| Dose UV ($J/cm^2$) | 2 | 6,7 | 5,5 |

Tableau III :

| Caractéristiques de films obtenus par réticulation sans photoinitiateur avec la même dose UV (5 passages à 8 m/mn = 6,7 $J/cm^2$) | | | |
|---|---|---|---|
| | Prépolymère à fonctions maléimide | Prépolymère non fonctionnalisé | Prépolymère non fonctionnalisé + Maléimide libre |
| Exemple d'Application n° | 24 | Comparatif 8 | Comparatif 10 |
| Dose UV ($J/cm^2$) | 6,7 | 6,7 | 6,7 |
| Dureté crayon | 2H | < 7B | 2B |
| Résistance à l'acétone | 29 s | < 1 s | < 1 s |

Tableau IV:

| Dose UV minimum nécessaire pour obtenir un film non collant en présence de 0,5% en poids de Darocure® 1173 et 0,5% en poids d'Irgacure® 184 | | | |
|---|---|---|---|
| | Prépolymère à fonctions maléimide | Prépolymère non fonctionnalisé | Prépolymère non fonctionnalisé + Maléimide libre |
| Exemple d'Application n° | 25 | Comparatif 9 | Comparatif 11 |
| Dose UV ($J/cm^2$) | 0,4 | 0,8 | 0,8 |

**Revendications**

1. Compositions polymérisables et/ou réticulables par la lumière ultraviolette ou visible, comprenant au moins un composé (A) contenant des doubles liaisons oléfiniques appauvries en électrons et au moins un composé (B) contenant des doubles liaisons oléfiniques enrichies en électrons, caractérisées par le fait que le ou les composés (A) sont choisis parmi les prépolymères comportant des fonctions maléimides (f) :

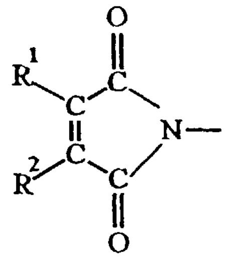

(f)

où $R^1$ et $R^2$ représentent chacun indépendamment H, alkyle en $C_1$-$C_{12}$ ou halogène, et consistant en les produits de réaction :

. d'au moins un anhydride maléique de formule (I) :

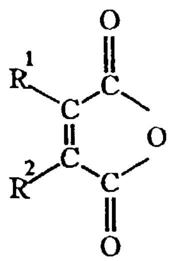

(I)

dans laquelle $R^1$ et $R^2$ sont tels que définis ci-dessus;

. d'au moins un composé (II) comportant au moins une fonction $-NH_2$ et au moins une autre fonction F choisie parmi -OH, $-NH_2$, -NH-, -COOH,

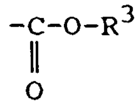 ou 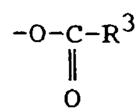,

$R^3$ représentant un reste alkyle en $C_1$-$C_5$ ;

. d'au moins un composé (III) de formation de la chaîne du prépolymère par polycondensation et/ou polyaddition,

le(s) composé(s) (II) ayant d'abord réagi avec le ou les anhydrides maléiques (I) pour ouvrir les cycles anhydride maléique, avec formation de fonctions acide maléamique (f') :

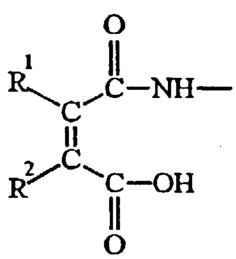

(f')

lesquelles ont été ensuite au moins partiellement refermées sous l'action de la chaleur pour donner des maléimides N-substitués par des groupements fonctionnalisés par une fonction F,
la chaîne desdits prépolymères ayant été formée par polycondensation et/ou polyaddition :

- du maléimide N-substitué formé portant la fonction F;
- du ou des composés (III) ;

- des produits non cyclisés portant ou non une fonction F formés en même temps que lesdits maléimides N-substitués ;
- du ou des anhydrides maléiques (I) ayant pu se trouver en excès après leur ouverture par le(s) composé(s) (II) ;

les fonctionnalités du ou des composé(s) (III) étant choisies pour permettre la constitution de la chaîne avec le greffage desdits maléimides N-substitués sur la chaîne directement par leur fonction F lorsque celle-ci est au moins l'une parmi -OH, $-NH_2$, -NH- et COOH, ou bien après transestérification des fonctions F lorsque celles-ci sont $-COOR^3$ ou $-OCOR^3$ pour permettre la condensation ou l'addition dudit maléimide N-substitué sur la chaîne, les fonctionnalités et proportions des composés (II) et (III) ayant été choisies de façon à exclure une gélification du milieu réactionnel.

**2.** Composition selon la revendication 1, caractérisées par le fait que le(s) composé(s) (II) a (ont) réagi avec le(s) anhydride(s) (I) dans des conditions stoechiométriques ou sensiblement stoechiométriques ou en excès du (ou des) anhydride(s) (I) par rapport au(x) composé(s) (II).

**3.** Compositions selon l'une des revendications 1 et 2, caractérisées par le fait que l'anhydride de formule (I) est l'anhydride maléique.

**4.** Compositions selon l'une des revendications 1 à 3, caractérisées par le fait que le composé (II) est choisi parmi les composés des formules $H_2N$-A-OH, $H_2N$-A-COOH, $H_2N$-A-$COOR^3$,

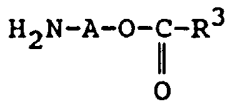

et $H_2N$-A-$NH_2$, dans lesquelles A représente un reste alkylène, linéaire, ramifié ou cyclique, ou un reste arylène, ces restes pouvant être interrompus par des atomes d'oxygène ou de soufre, ou par des groupements $-NR^4-$, $R^4$ représentant hydrogène ou alkyle.

**5.** Compositions selon la revendication 4, caractérisées par le fait que le composé (II) est choisi parmi :

- les aminoalcools, tels que l'éthanolamine, la propanolamine, l'isopropanolamine, le 2-(2-aminoéthoxy)éthanol, la N-(2-aminoéthyl)éthanolamine;
- les aminoacides, tels que la valine, l'acide p-aminobenzoïque, l'alanine, l'acide 2-aminohexanoïque, l'acide 6-aminohexanoïque, l'acide 7-aminoheptanoïque, l'acide 2-aminoisobutyrique ;
- les esters méthyliques ou éthyliques des aminoacides ci-dessus ;
- les esters des acides carboxyliques en $C_2$-$C_5$, tels que l'acide acétique, avec les aminoalcools ci-dessus ;
- les diamines, telles que l'éthylènediamine, la 2-méthyl-1,5-pentaméthylènediamine, l'hexaméthylènediamine, la 2,2,4- et/ou 2,4,4-triméthylhexaméthylènediamine, la dodécaméthylènediamine, la 5-méthylnonaméthylènediamine, la décaméthylènediamine, l'isophoronediamine, le bis(4-aminocyclohexyl)méthane, le bis(3-méthyl-4-aminocyclohexyl)méthane, le bis(3-méthyl-4-amino-5-éthylcyclohexyl)méthane, le 1,2-bis(4-aminocyclohexyl)éthane, le 2,2'-bis(4-aminocyclohexyl) propane, le 2,2'-bis(3-méthyl-4-aminocyclohexyl)propane, la 4,7-dioxadécane-1,10-diamine, la 4,9-dioxadodécane-1,12-diamine, la 4,7,10-trioxatridécane-1,13-diamine ; et
- les di- ou triamines polyoxyéthylénées et/ou polyoxypropylénées ;

ainsi que des composés trifonctionnels tels que la L-sérine, l'acide 3-hydroxy 4-amino benzoïque et l'acide 3-amino 4-hydroxy benzoïque et d'autres triamines telles que la N-(2-aminoéthyl)-1,2-éthanediamine et la N-(3-aminopropyl)-1,3-propanediamine.

**6.** Compositions selon l'une des revendication 1 à 5, caractérisées par le fait que, lorsque le maléimide N-substitué comporte une fonction F qui est -OH, $-NH_2$ ou -NH-, les composés (III) sont :

- au moins un polyacide et/ou au moins un anhydride cyclique ; et
- au moins l'un parmi un polyol, un époxy mono- ou polyfonctionnel, une polyamine et un polyisocyanate ; ou
- au moins un polyisocyanate ; et
- éventuellement au moins l'un parmi un polyol, un époxy mono- ou polyfonctionnel, un polyacide et/ou un

anhydride cyclique et une polyamine.

**7.** Compositions selon l'une des revendications 1 à 6, caractérisées par le fait que, lorsque le maléimide N-substitué comporte une fonction F qui est -COOH, les composés (III) sont :

- au moins l'un parmi un polyol, un époxy mono- ou polyfonctionnel ou une polyamine ; et
- éventuellement un polyacide et/ou un anhydride cyclique ou un polyisocyanate ; ou
- au moins un polyisocyanate ; et
- éventuellement au moins l'un parmi un polyol, un époxy mono- ou polyfonctionnel, un polyacide et/ou un anhydride cyclique et une polyamine.

**8.** Compositions selon l'une des revendications 1 à 7, caractérisées par le fait que, lorsque le maléimide N-substitué comporte une fonction F qui est

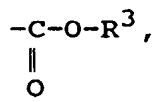

les composés (III) sont :

- au moins un composé permettant la transestérification, comportant une fonction -OH et au moins une autre fonction choisie parmi -OH, -NH- et -COOH ; et
- dans le cas où cette autre fonction est -OH ou -NH-, les composés (III) tels que définis à la revendication 6 ; et
- dans le cas où cette autre fonction est -COOH, les composés (III) tels que définis à la revendication 7.

**9.** Compositions selon l'une des revendications 1 à 8, caractérisées par le fait que, lorsque le maléimide N-substitué comporte une fonction F qui est

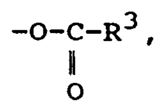

les composés (III) sont :

- au moins un composé permettant la transestérification, comportant une fonction acide et au moins une autre fonction choisie parmi -OH, -NH- et -COOH ; et
- dans le cas où cette autre fonction est -OH ou -NH-, les composés (III) tels que définis à la revendication 6 ; et
- dans le cas où cette autre fonction est -COOH, les composés (III) tels que définis à la revendication 7.

**10.** Compositions selon l'une des revendications 6 à 9, caractérisées par le fait que les polyols en tant que composés (III) sont choisis parmi le propylène glycol, le dipropylène glycol, le diéthylène glycol, l'éthylène glycol, le 1,3-butanediol, le 1,4-butanediol, le néopentyl glycol, le triéthylène glycol, le tripropylène glycol, le butylène glycol, le glycérol, le triméthylol propane, le 1,6-hexanediol, le 1,4-cyclohexane diol, le 1,4-cyclohexanediméthanol, le 2-méthyl-1,3-propane diol, le 2-butyl-2-éthyl-1,3-propane diol, le 1,2-bis(hydroxyéthyl)cyclohexane, la 4'-(2-hydroxyéthoxy)-2,2-diméthyl-2-hydroxyacétophénone, le 2,2-diméthyl-3-hydroxypropyl-2,2-diméthyl-3-hydroxy propionate et le dibromonéopentylglycol, ainsi que les polyéther polyols, les polyester polyols, les polyuréthane polyols de masse moléculaire moyenne en poids comprise entre 200 et 1000.

**11.** Compositions selon l'une des revendications 6 à 9, caractérisées par le fait que les composés époxy en tant que composés (III) sont choisis parmi l'épichlorhydrine, le 7-oxabicyclo[4.1.0]-heptane, le 3,4-époxycyclohexylméthyl 3,4-époxycyclohexane carboxylate, le diglycidyl éther de bisphénol A, le 1,2-époxydécane, le 3,3,3-trichloropropylène oxyde et l'allyl glycidyl éther.

**12.** Compositions selon l'une des revendications 6 à 9, caractérisées par le fait que les polyisocyanates en tant que composés (III) sont choisis parmi le 4,4'-diphénylméthane diisocyanate, le triméthylhexaméthylène diisocyanate, le toluène diisocyanate, l'isophorone diisocyanate, le tétraméthylène diisocyanate, le pentaméthylène diisocyanate, le 4,4'-dicyclohexylméthane diisocyanate, le 2,2,4-triméthyl-hexaméthylène-1,6-diisocyanate, le triphénylméthane-4,4',4"-triisocyanate, le polyméthylène polyphénylisocyanate, le m-phénylène diisocyanate, le p-phénylène diisocyanate, le 1,5-naphtalène diisocyanate, le naphtalène-1,4-diisocyanate, le diphénylène-4,4'-diisocyanate, le 3,3'-bi-tolylène-4,4'-diisocyanate, le 1,4-cyclohexylène diméthylène diisocyanate, le xylylène-1,4-diisocyanate, le xylylène-1,3-diisocyanate, le cyclohexyl-1,4-diisocyanate et le 3,3'-diméthyldiphénylméthane-4,4'-diisocyanate, ainsi que les prépolymères de type polyurée ou polyuréthane à terminaisons isocyanate, tels que les condensats de polyols et/ou de polyamines avec un excès de polyisocyanate ; et les polyisocyanates qui contiennent, dans leur molécule, un cycle isocyanurate et les biurets à fonctions terminales isocyanate.

**13.** Compositions selon l'une des revendications 6 à 9, caractérisées par le fait que les polyacides en tant que composés (III) sont choisis parmi les acides maléique, fumarique, chloromaléique, citraconique, métaconique, itaconique, tétraconique, orthophtalique, isophtalique, téréphtalique, succinique, méthylsuccinique, adipique, sébacique, tétrabromophtalique, tétrachlorophtalique, glutarique, pimélique et pyromellitique.

**14.** Compositions selon l'une des revendications 6 à 9, caractérisées par le fait que les anhydrides cycliques en tant que composés (III) sont choisis parmi l'anhydride maléique, l'anhydride succinique, l'anhydride phtalique, l'anhydride trimellitique, l'anhydride pyromellitique, l'anhydride tétrahydrophtalique, l'anhydride hexahydrophtalique, les anhydrides chlorés tels que l'anhydride chlorendique, l'anhydride tétrachlorophtalique et l'anhydride tétrabromophtalique, l'anhydride méthyltétrahydrophtalique, l'anhydride nadique, l'anhydride méthyl nadique, l'anhydride itaconique, l'anhydride citraconique, et l'anhydride glutarique.

**15.** Compositions selon l'une des revendications 6 à 9, caractérisées par le fait que les polyamines en tant que composés (III) sont choisies parmi l'éthylène diamine, la 2-méthyl-1,5-pentaméthylène diamine, la triméthylhexane-1,6-diamine, l'hexaméthylènediamine, la 2,2,4- et/ou 2,4,4-triméthylhexaméthylènediamine, la dodécaméthylènediamine, la triméthylhexaméthylènediamine, la 5-méthylnonaméthylène-diamine, la décaméthylènediamine, l'isophoronediamine, le bis(4-aminocyclohexyl)méthane, le bis(3-méthyl-4-aminocyclohexyl)méthane, le bis (3-méthyl-4-amino-5-éthylcyclohexyl)-méthane, le 1,2-bis(4-aminocyclohexyl)éthane, le 2,2'-bis(4-aminocyclohexyl)propane et le 2,2'-bis(3-méthyl-4-aminocyclohexyl)propane.

**16.** Compositions selon l'une des revendications 6 à 9, caractérisées par le fait que les composés (III) permettant la transestérification, comportant une fonction OH et au moins une autre fonction choisie parmi -OH, -NH- et COOH, sont choisis parmi l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, le 2-(butylamino)-éthanol, le 2-(cyclohexylamino)éthanol, le 2-(phénylamino)-éthanol, la 3-hydroxypipéridine, la 4-hydroxypipéridine, le dipropylène glycol, le tripropylène glycol, le triéthylène glycol, le 1,6-hexanediol, le 1,4-cyclohexanediol, le 1,4-cyclohexanediméthanol, le 2-butyl 2-éthyl 1,3-propanediol et le 1,2-bis(hydroxyéthyl)-cyclohexane.

**17.** Compositions selon l'une des revendications 6 à 9, caractérisées par le fait que les composés (III) permettant la transestérification, comportant une fonction acide et au moins une autre fonction choisie parmi -OH, -NH- et -COOH, sont choisis parmi l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, la N-méthyl glycine, l'acide 2-méthylamino benzoïque, l'acide orthophtalique, l'acide téréphtalique, l'acide isophtalique, l'acide adipique, l'acide pimélique, l'acide sébacique, l'acide tétrabromophtalique et l'acide tétrachlorophtalique.

**18.** Composition selon l'une des revendications 1 à 17, caractérisées par le fait que la masse moléculaire moyenne en nombre ($\overline{Mn}$) des prépolymères (A) est comprise entre 350 et 5000, notamment entre 500 et 3000 (mesurée par GPC, étalonnage avec le polystyrène).

**19.** Compositions selon l'une des revendications 1 à 18, caractérisées par le fait que les prépolymères (A) comportent 0,02 à 5 moles de groupements maléimide, notamment 0,05 à 2 moles de groupements maléimide, par kg de prépolymère.

**20.** Compositions selon l'une des revendications 1 à 19, caractérisées par le fait qu'après leur formation, les fonctions acides terminales des prépolymères (A) ont réagi avec un composé monoépoxy pour régler leur indice d'acide, en particulier à une valeur inférieure à 5 mg KOH/g.

**21.** Compositions selon l'une des revendications 1 à 20, caractérisées par le fait qu'elles comprennent en outre au moins un composé (A') choisi parmi les maléimides N-substitués de formule :

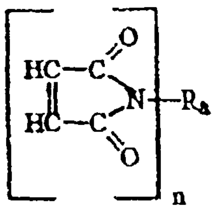 ou 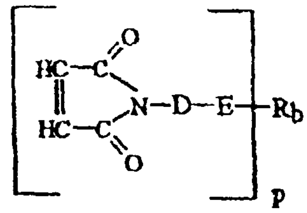

avec :

- $R_a$, $R_b$ = groupement hydrocarboné mono à tétravalent, aliphatique, aromatique ou à structure mixte aliphatique-aromatique ;
- n, p = 1 à 4 ;
- D est un reste alkylène, arylène, alkylarylène ou arylalkylène ; et
- E est une liaison ester (COO ou OCO) ou une liaison uréthane

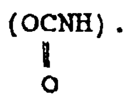

**22.** Compositions selon l'une des revendications 1 à 21, caractérisées par le fait que le ou les composés (B) sont choisis parmi :

- les composés de la formule (V) :

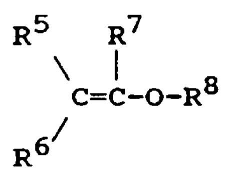 (V)

dans laquelle :

  - $R^5$, $R^6$ et $R^7$ représentent chacun indépendamment hydrogène ou un groupe aliphatique, de préférence un groupe alkyle en $C_1$-$C_{12}$, tel que méthyle, éthyle et propyle ; et
  - $R^8$ représente un reste aliphatique ou un reste aromatique,

- les composés représentés par la formule (VI) :

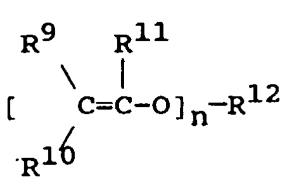 (VI)

dans laquelle :

  - $R^9$, $R^{10}$ et $R^{11}$ représentent chacun indépendamment hydrogène ou un groupe aliphatique, de préférence un groupe alkyle en $C_1$-$C_{12}$, tel que méthyle, éthyle et propyle ; et

- $R^{12}$ est un reste n-valent d'un polyol organique ;
- n est un entier de 2 à 6 ;

- la N-vinyl pyrrolidone, le N-vinyl imidazole, la 2-vinyl pyridine, le N-vinylcarbazole, le N-vinyl caprolactame, le para-méthoxystyrène, l'isoeugénol, le 4-propénylanisole, le 4-vinylbutoxy carbonate de monobutyle, le 4-propényl butoxycarbonate de monobutyle, la N-vinyl-formamide et ses dérivés.

**23.** Compositions selon l'une des revendications 1 à 22, caractérisées par le fait que le rapport du nombre de doubles liaisons du ou des composés riches en électrons (B) sur le nombre de doubles liaisons du ou des composés appauvris en électrons (A) et le cas échéant (A') est compris entre 1:5 et 5:1.

**24.** Compositions selon l'une des revendications 1 à 23, caractérisées par le fait qu'elles ne comportent pas de photoinitiateur ni de photosensibilisateur.

**25.** Compositions selon l'une des revendications 1 à 24, caractérisées par le fait qu'elles comprennent en outre au moins l'un parmi un diluant réactif monomère ou oligomère, un solvant ou diluant non réactif, et un additif usuel tel qu'un pigment.

**26.** Procédé de revêtement comprenant l'application sur un substrat d'un film d'une composition polymérisable et/ou réticulable par la lumière ultraviolette ou visible telle que définie à l'une des revendications 1 à 25 et le durcissement de ladite composition par exposition dudit film à la lumière ultraviolette ou visible.

**27.** Procédé de revêtement selon la revendication 26, caractérisé par le fait que l'on conduit le durcissement de la composition jusqu'à un état non poisseux.

**28.** Compositions polymérisées et/ou réticulées obtenues par réticulation des compositions telles que définies à l'une des revendications 1 à 25.

**29.** Substrats revêtus par un film durci obtenu par durcissement d'une composition polymérisable et/ou réticulable par la lumière ultraviolette ou visible, telle que définie à l'une des revendications 1 à 25.

**Patentansprüche**

**1.** Durch ultraviolettes oder sichtbares Licht polymerisierbare und/oder vernetzbare Zusammensetzungen, enthaltend mindestens eine Verbindung (A), die an Elektronen verarmte olefinische Doppelbindungen aufweist, und mindestens eine Verbindung (B), die an Elektronen angereicherte olefinische Doppelbindungen aufweist, dadurch gekennzeichnet, daß die Verbindung(en) (A) ausgewählt sind aus Präpolymeren, die Maleinimidfunktionen (f) tragen:

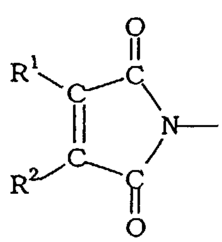 (f)

worin $R^1$ und $R^2$ unabhängig voneinander H, $C_1$-$C_{12}$-Alkyl oder Halogen bedeuten, und bestehen aus den Produkten der Reaktion:

. mindestens eines Maleinsäureanhydrids der Formel (I):

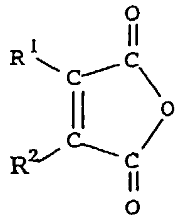

(I)

in der $R^1$ und $R^2$ die oben angegebenen Bedeutungen besitzen;

. mindestens einer Verbindung (II), die mindestens eine Funktion $-NH_2$ und mindestens eine weitere Funktion F, ausgewählt aus -OH, $-NH_2$, -NH-, -COOH-,

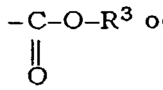 oder 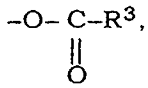

worin $R^3$ einen $C_1$-$C_5$-Alkylrest darstellt, aufweist:

. mindestens einer Verbindung (III) zur Bildung der Kette des Präpolymers durch Polykondensation und/oder Polyaddition,

wobei die Verbindung(en) (II) zuvor mit dem oder den Maleinsäureanhydriden (I) reagiert haben zur Öffnung der Maleinsäureanhydridringe, unter Bildung von Maleinamidsäurefunktionen (f'):

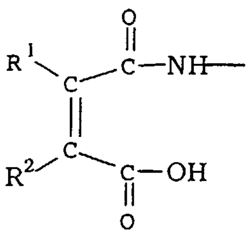

(f')

welche anschließend zumindest teilweise unter der Einwirkung von Wärme geschlossen worden sind zur Bildung von Maleinimiden, die durch Gruppen N-substituiert sind, welche durch eine Funktion F funktionalisiert sind, wobei die Ketten der genannten Präpolymeren gebildet worden sind durch Polykondensation und/oder Polyaddition:

- des gebildeten N-substituierten Maleinimids, welches die Funktion F trägt;
- der Verbindung(en) (III);
- von nicht cyclisierten Produkten, die gegebenenfalls eine Funktion F aufweisen, die gleichzeitig mit den genannten N-substituierten Maleinimiden gebildet worden sind;
- des oder der Maleinsäureanhydride(s) (I), die im Überschuß nach ihrer Öffnung durch die Verbindung(en) (II) vorliegen können;

wobei die Funktionalitäten der Verbindung(en) (III) derart ausgewählt sind, daß die Bildung der Kette mit der Aufpfropfung der N-substituierten Maleinimide auf die Kette direkt über ihre Funktion F erfolgt, wenn diese mindestens eine aus der Gruppe -OH, $-NH_2$, -NH- und -COOH ist, oder nach der Umesterung der Funktionen F, wenn diese Gruppen $-COOR^3$ oder $-OCOR^3$ sind, zur Ermöglichung der Kondensation oder der Addition des N-substituierten Maleinimids an die Kette,
wobei die Funktionalitäten und die Verhältnisse der Verbindungen (II) und (III) derart ausgewählt worden sind, daß eine Gelbildung des Reaktionsmediums ausgeschlossen ist.

**2.** Zusammensetzung nach Anspruch 1, dadurch gekennzeichnet, daß die Verbindung(en) (II) mit dem (den) Anhydrid (en) (I) unter stöchiometrischen oder weitgehend stöchiometrischen Bedingungen oder im Überschuß des (oder der) Anhydrids (Anhydride) (I), bezogen auf die Verbindung(en) (II) umgesetzt worden sind.

**3.** Zusammensetzungen nach einem der Ansprüche 1 und 2, dadurch gekennzeichnet, daß das Anhydrid der Formel (I) Maleinsäureanhydrid ist.

**4.** Zusammensetzungen nach einem der Ansprüche 1 bis 3, dadurch gekennzeichnet, daß die Verbindung (II) ausgewählt wird aus Verbindungen der Formeln

$H_2N-A-OH$, $H_2N-A-COOH$, $H_2N-A-COOR^3$, 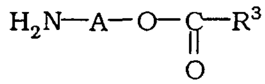

und $H_2N$-A-$NH_2$ worin A einen geradkettigen, verzweigten oder cyclischen Alkylenrest oder einen Arylenrest bedeutet, wobei diese Reste durch Sauerstoff- oder Schwefelatome oder Gruppen -$NR^4$-, worin $R^4$ Wasserstoff oder Alkyl darstellt, unterbrochen sein können.

**5.** Zusammensetzungen nach Anspruch 4, dadurch gekennzeichnet, daß die Verbindung (II) ausgewählt ist aus:

- Aminoalkoholen, wie Ethanolamin, Propanolamin, Isopropanolamin, 2-(2-Aminoethoxy)-ethanol, N-(2-Aminoethyl)-ethanolamin;
- Aminosäuren, wie Valin, p-Aminobenzoesäure, Alanin, 2-Aminohexansäure, 6-Aminohexansäure, 7-Aminoheptansäure, 2-Aminoisobuttersäure;
- Methyl- oder Ethylester der obigen Aminosäuren;
- Ester von $C_2$-$C_5$-Carbonsäuren, wie Essigsäure, mit den oben genannten Aminoalkoholen;
- Diaminen, wie Ethylendiamin, 2-Methyl-1,5-pentamethylendiamin, Hexamethylendiamin, 2,2,4- und/oder 2,4,4-Trimethylhexamethylendiamin, Dodecamethylendiamin, 5-Methyl-nonamethylendiamin, Decamethylendiamin, Isophorondiamin, Bis(4-aminocyclohexyl)-methan, Bis(3-methyl-4-aminocyclohexyl)-methan, Bis (3-methyl-4-amino-5-ethylcyclohexyl)-methan, 1,2-Bis(4-aminocyclohexyl)-ethan, 2,2'-Bis(4-aminocyclohexyl)-propan, 2,2'-Bis(3-methyl-4-aminocyclohexyl)-propan, 4,7-Dioxadecan-1,10-diamin, 4,9-Dioxadodecan-1,12-diamin, 4,7,10-Trioxatridecan-1,13-diamin; und
- polyoxyethylierten und/oder polyoxypropylierten Di- oder Triaminen; sowie trifunktionellen Verbindungen, wie L-Serin, 3-Hydroxy-4-aminobenzoesäure und 3-Amino-4-hydroxybenzoesäure und anderen Triaminen, wie N-(2-Aminoethyl)-1,2-ethandiamin und N-(3-Aminopropyl)-1,3-propandiamin.

**6.** Zusammensetzungen nach einem der Ansprüche 1 bis 5, dadurch gekennzeichnet, daß, wenn das N-substituierte Maleinimid eine Funktion F trägt, die -OH, -$NH_2$ oder -NH- ist, die Verbindungen (III):

- mindestens eine Polysäure und/oder mindestens ein cyclisches Anhydrid; und
- mindestens einen Vertreter ausgewählt unter einem Polyol, einem mono- oder polyfunktionellen Epoxid, einem Polyamin und einem Polyisocyanat; oder
- mindestens ein Polyisocyanat; und
- gegebenenfalls mindestens einen Vertreter ausgewählt aus einem Polyol, einem mono- oder polyfunktionellen Epoxid, einer Polysäure und/oder einem cyclischen Anhydrid und einem Polyamin,

umfassen.

**7.** Zusammensetzungen nach einem der Ansprüche 1 bis 6, dadurch gekennzeichnet, daß, wenn das N-substituierte Maleinimid eine Funktion F aufweist, die -COOH ist, die Verbindungen (III):

- mindestens einen Vertreter ausgewählt aus einem Polyol, einem mono- oder polyfunktionellen Epoxid oder einem Polyamin; und
- gegebenenfalls einer Polysäure und/oder einem cyclischen Anhydrid oder einem Polyisocyanat; oder
- mindestens ein Polyisocyanat; und
- gegebenenfalls mindestens einen Vertreter ausgewählt aus einem Polyol, einem mono- oder polyfunktionellen Epoxid, einer Polysäure und/oder einem cyclischen Anhydrid und einem Polyamin,

umfassen.

**8.** Zusammensetzungen nach einem der Ansprüche 1 bis 7, dadurch gekennzeichnet, daß, wenn das N-substituierte

Maleinimid eine Funktion F aufweist, welche

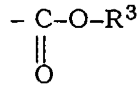

entspricht, die Verbindungen (III):

- mindestens eine Verbindung, die die Umesterung ermöglicht, eine Funktion -OH aufweist und mindestens eine weitere Funktion, ausgewählt aus -OH, -NH- und -COOH; und
- in dem Fall, da diese andere Funktion -OH oder -NH- ist, die Verbindungen (III), wie sie in Anspruch 6 definiert worden sind; und
- in dem Fall, da diese andere Funktion -COOH ist, die Verbindungen (III), wie sie in Anspruch 7 definiert worden sind,

umfassen.

**9.** Zusammensetzung nach einem der Ansprüche 1 bis 8, dadurch gekennzeichnet, daß, wenn das N-substituierte Maleinimid eine Funktion F trägt, die

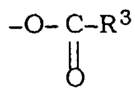

entspricht, die Verbindungen (III):

- mindestens eine Verbindung, die die Umesterung ermöglicht, die eine Säurefunktion und mindestens eine weitere Funktion ausgewählt aus -OH, -NH- und -COOH aufweist; und
- in dem Fall, da diese andere Funktion -OH oder -NH- ist, die Verbindungen (III), wie sie in Anspruch 6 definiert sind; und
- in dem Fall, da diese andere Funktion -COOH ist, die Verbindungen (III), wie sie in Anspruch 7 definiert sind,

umfassen.

**10.** Zusammensetzungen nach einem der Ansprüche 6 bis 9,m dadurch gekennzeichnet, daß die Polyole als Verbindungen (III) ausgewählt sind aus Propylenglykol, Dipropylenglykol, Diethylenglykol, Ethylenglykol, 1,3,Butandiol, 1,4-Butandiol, Neopentylglykol, Triethylenglykol, Tripropylenglykol, Butylenglykol, Glycerol, Trimethylolpropan, 1,6-Hexandiol, 1,4-Cyclohexandiol, 1,4-Cyclohexandimethanol, 2-Methyl-1,3-propandiol, 2-butyl-2-ethyl-1,3-propandiol, 1,2-Bis(hydroxyethyl)cyclohexan, 4',(2-Hydroxyethoxy)-2,2,dimethyl-2-hydroxyacetophenon, 2,2-Dimethyl-3-hydroxypropyl-2,2-dimethyl-3-hydroxy-propionat und Dibromneopentylglykol, sowie Polyetherpolyole, Polyesterpolyole, Polyurethanpolyole mit einer mittleren gewichtsmäßigen Molekülmasse zwischen 200 und 1000.

**11.** Zusammensetzungen nach einem der Ansprüche 6 bis 9, dadurch gekennzeichnet, daß die Epoxidverbindungen als Verbindungen (III) ausgewählt sind aus Epichlorhydrin, 7-Oxabicyclo[4.1.0]heptan, 3,4-Epoxycyclohexylmethyl-3,4-epoxycyclohexan-carboxylat, Diglycidylether von Bisphenol A, 1,2-Epoxydecan, 3,3,3-Trichlorpropylenoxid und Allylglycidylether.

**12.** Zusammensetzungen nach einem der Ansprüche 6 bis 9, dadurch gekennzeichnet, daß die Polyisocyanate als Verbindungen (III) ausgewählt sind aus 4,4'-Diphenylmethan-diisocyanat, Trimethylhexamethylen-diisocyanat, Toluoldiisocyanat, Isophoron-diisocyanat, Tetramethylen-diisocyanat, Pentamethylen-diisocyanat, 4,4'-Dicyclohexylmethan-diisocyanat, 2,2,4-Trimethyl-hexamethylen-1,6-diisocyanat, Triphenylmethan,4,4',4",triisocyanat, Polymethylen-polyphenylisocyanat, m-Phenylen-diisocyanat, p-Phenylen-diisocyanat, 1,5-Naphthalin-diisocyanat, Naphthalin-1,4-diisocyanat, Diphenylen-4,4'-diisocyanat, 3,3'-Bi-tolylen-4,4'-diisocyanat, 1,4-Cyclohexylen-dimethylen-diisocyanat, Xylylen-1,4-diisocyanat, Xylylen-1,3-diisocyanat, Cyclohexyl-1,4-diisocyanat und 3,3'-Dimethyl-diphenylmethan-4,4'-diisocyanat sowie Präpolymere vom Typ Polyharnstoff oder Polyurethan mit endständigen Isocyanatgruppen, wie Kondensate aus Polyolen und/oder Polyaminen mit einem Überschuß Polyisocyanat;

und Polyisocyanate, die an ihrem Molekül einen Isocyanuratring aufweisen und Biuretverbindungen mit endständigen Isocyanatgruppen.

**13.** Zusammensetzungen nach einem der Ansprüche 6 bis 9, dadurch gekennzeichnet, daß die Polysäuren als Verbindungen (III) ausgewählt sind aus Maleinsäure, Fumarsäure, Chlormaleinsäure, Citraconsäure, Metaconsäure, Itaconsäure, Tetraconsäure, Orthopthalsäure, Isophthalsäure, Terephthalsäure, Bernsteinsäure, Methylbernsteinsäure, Adipinsäure, Sebacinsäure, Tetrabromphthalsäure, Tetrachlorphthalsäure, Glutarsäure, Pimelinsäure und Pyromellitsäure.

**14.** Zusammensetzungen nach einem der Ansprüche 6 bis 9, dadurch gekennzeichnet, daß die cyclischen Anhydride als Verbindungen (III) ausgewählt sind aus Maleinsäureanhydrid, Bernsteinsäureanhydrid, Phthalsäureanhydrid, Trimellitsäureanhydrid, Pyromellitsäureanhydrid, Tetrahydrophthalsäureanhydrid, Hexahydrophthalsäureanhydrid, chlorierten Anhydriden, wie Chlorendicanhydrid, Tetrachlorphthalsäureanhydrid und Tetrabromphthalsäureanhydrid, Methyltetrahydrophthalsäureanhydrid, Nadinsäureanhydrid, Methylnadinsäureanhydrid, Itaconsäureanhydrid, Citraconsäureanhydrid und Glutarsäureanhydrid.

**15.** Zusammensetzungen nach einem der Ansprüche 6 bis 9, dadurch gekennzeichnet, daß die Polyamine als Verbindungen (III) ausgewählt sind aus Ethylendiamin, 2-Methyl-1,5-pentamethylendiamin, Trimethylhexan-1,6,diamin, Hexamethylendiamin, 2,2,4- und/oder 2,4,4-Trimethylhexamethylendiamin, Dodecamethylendiamin, Trimethylhexamethylendiamin, 5-Methyl-nonamethylendiamin, Decamethylendiamin, Isophorondiamin, Bis(4-aminocyclohexyl)-methan, Bis(3-methyl-4-aminocyclohexyl)-methan, Bis(3-methyl-4-amino-5-ethylcyclohexyl)-methan, 1,2,Bis(4-aminocyclohexyl)-ethan, 2,2'-Bis(4-aminocyclohexyl)-propan und 2,2'-Bis(3-methyl-4-aminocyclohexyl)-propan.

**16.** Zusammensetzungen nach einem der Ansprüche 6 bis 9, dadurch gekennzeichnet, daß die eine Umesterung ermöglichenden Verbindungen (III), die eine OH-Funktion und mindestens eine weitere Funktion ausgewählt aus -OH, -NH- und -COOH aufweisen, ausgewählt sind aus 2-Hydroxybenzol-essigsäure, p-Hydroxybenzoesäure, m-Hydroxybenzoesäure, 2-Hydroxy-3-methyl-benzoesäure, 2-Hydroxy-4-methyl-benzoesäure, 2-Hydroxy-5-methylbenzoesäure, 2-(Butylamino)ethanol, 2-(Cyclohexylamino)-ethanol, 2-(Phenylamino)-ethanol, 3-Hydroxypiperidin, 4-Hydroxypiperidin, Dipropylenglykol, Tripropylenglykol, Triethylenglykol, 1,6-Hexandiol, 1,4-Cyclohexandiol, 1,4-Cyclohexandimethanol, 2-Butyl-2-ethyl-1,3-propandiol und 1,2,Bis(hydroxyethyl)-cyclohexan.

**17.** Zusammensetzungen nach einem der Ansprüche 6 bis 9, dadurch gekennzeichnet, daß die Verbindungen (III), die eine Umesterung ermöglichen, eine Säurefunktion und mindestens eine weitere Funktion ausgewählt aus -OH, -NH- und -COOH aufweisen, ausgewählt sind aus 2-Hydroxybenzol-essigsäure, p-Hydroxybenzoesäure, m-Hydroxybenzoesäure, 2-Hydroxy-3-methyl-benzoesäure, 2-Hydroxy-4-methyl-benzoesäure, 2-Hydroxy-5-methylbenzoesäure, N-Methylglycin, 2-Methylamino-benzoesäure, Orthophthalsäure, Terephthalsäure, Isophthalsäure, Adipinsäure, Pimelinsäure, Sebacinsäure, Tetrabromphthalsäure und Tetrachlorphthalsäure.

**18.** Zusammensetzung nach einem der Ansprüche 1 bis 17, dadurch gekennzeichnet, daß die zahlenmittlere ($\overline{Mn}$) Molekülmasse der Präpolymeren (A) zwischen 350 und 5000, insbesondere zwischen 500 und 3000 (gemessen durch GPC unter Verwendung von Polystyrol als Eichsubstanz) liegt.

**19.** Zusammensetzungen nach einem der Ansprüche 1 bis 18, dadurch gekennzeichnet, daß die Präpolymeren (A) 0,02 bis 5 Mol Maleinimidgruppen, insbesondere 0,05 bis 2 Mol Maleinimidgruppen pro kg des Präpolymeren enthalten.

**20.** Zusammensetzungen nach einem der Ansprüche 1 bis 19, dadurch gekennzeichnet, daß die endständigen Säuregruppen der Präpolymere (A) nach ihrer Bildung mit einer Monoepoxidverbindung umgesetzt worden sind zur Steuerung ihres Säureindex, insbesondere auf einen Wert von weniger als 5 mg KOH/g.

**21.** Zusammensetzungen nach einem der Ansprüche 1 bis 20, dadurch gekennzeichnet, daß sie zusätzlich mindestens eine Verbindung (A'), ausgewählt aus N-substituierten Maleinimiden der Formel enthalten:

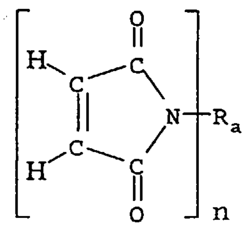

oder

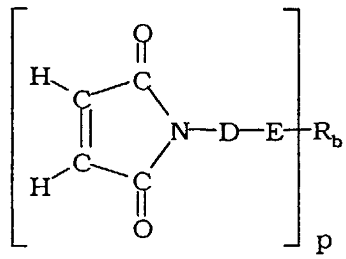

worin:

- $R_a$, $R_b$ = ein- bis vierwertige Kohlenwasserstoffgruppen mit aliphatischer, aromatischer oder gemischter aliphatisch-aromatischer Struktur;
- n, p = 1 bis 4;
- D ein Alkylenrest, Arylenrest, Alkylarylenrest oder Arylalkylenrest; und
- E eine Esterbindung (COO oder OCO) oder eine Urethanbindung

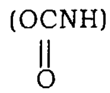

bedeuten.

**22.** Zusammensetzungen nach einem der Ansprüche 1 bis 21, dadurch gekennzeichnet, daß die Verbindung(en) (B) ausgewählt sind aus:

- Verbindungen der Formel (V):

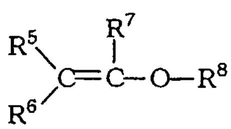

(V)

in der:

- $R^5$, $R^6$ und $R^7$ jeweils unabhängig voneinander Wasserstoff oder eine aliphatische Gruppe, vorzugsweise eine $C_1$-$C_{12}$-Alkylgruppe, wie Methyl, Ethyl und Propyl; und
- $R^8$ einen aliphatischen Rest oder einen aromatischen Rest bedeuten,

- Verbindungen der Formel (VI):

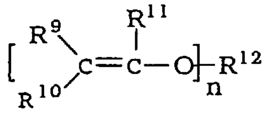

(VI)

in der:

- $R^9$, $R^{10}$ und $R^{11}$ jeweils unabhängig voneinander Wasserstoff oder eine aliphatische Gruppe, vorzugsweise eine $C_1$-$C_{12}$-Alkylgruppe, wie Methyl, Ethyl und Propyl;
- $R^{12}$ einen n-wertigen Rest eines organischen Polyols; und
- n eine ganze Zahl mit einem Wert von 2 bis 6 bedeuten;

- N-Vinylpyrrolidin, N-Vinylimidazol, 2-Vinylpyridin. N-Vinylcarbazol, N-Vinylcaprolactam, p-Methoxystyrol, Isoeugenol, 4-Propenylanisol, 4-Vinylbutoxykohlensäuremonobutylester, 4-Propenyl-butoxykohlensäuremonobutylester, N-Vinylformamid und deren Derivaten.

**23.** Zusammensetzungen nach einem der Ansprüche 1 bis 22, dadurch gekennzeichnet, daß das Verhältnis von Doppelbindungen des oder der elektronenreichen Verbindungen (B) zu der Anzahl der Doppelbindungen des oder der elektronenarmen Verbindungen (A) und gegebenenfalls (A') zwischen 1:5 und 5:1 liegt.

**24.** Zusammensetzungen nach einem der Ansprüche 1 bis 23, dadurch gekennzeichnet, daß sie weder einen Photoinitiator noch einen Photosensibilisator enthalten.

**25.** Zusammensetzungen nach einem der Ansprüche 1 bis 24, dadurch gekennzeichnet, daß sie zusätzlich mindestens eine Verbindung ausgewählt aus einem monomeren oder oligomeren reaktiven Verdünnungsmittel, einem nichtreaktiven Lösungsmittel oder Verdünnungsmittel und einem üblichen Additiv, wie einem Pigment, enthalten.

**26.** Überzugsverfahren umfassend die Auftragung eines Films aus einer durch ultraviolettes oder sichtbares Licht polymerisierbaren und/oder vernetzbaren Zusammensetzung, wie sie in einem der Ansprüche 1 bis 25 definiert worden ist, auf ein Substrat und Aushärten der Zusammensetzung durch Belichten des Films mit ultraviolettem oder sichtbarem Licht.

**27.** Überzugsverfahren nach Anspruch 26, dadurch gekennzeichnet, daß die Aushärtung der Zusammensetzung bis zu einem nicht-klebenden Zustand erfolgt.

**28.** Polymerisierte und/oder vernetzte Zusammensetzungen erhalten durch Vernetzung der Zusammensetzungen, wie sie in einem der Ansprüche 1 bis 25 definiert sind.

**29.** Substrate überzogen mit einem ausgehärteten Film erhalten durch Aushärten einer durch ultraviolettes oder sichtbares Licht polymerisierbaren und/oder vernetzbaren Zusammensetzung, wie sie in einem der Ansprüche 1 bis 25 definiert ist.

## Claims

**1.** Compositions which are polymerizable and/or crosslinkable by ultraviolet or visible light, comprising at least one compound (A) containing electron depleted olefinic double bonds ; and at least one compound (B) containing electron enriched olefinic double bonds, characterized by the fact that said at least one compound (A) is selected among prepolymers having maleimide functions (f) :

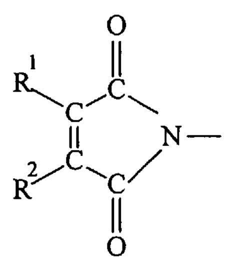

(f)

wherein each of $R^1$ and $R^2$ represents independently H, a $C_1$-$C_{12}$ alkyl group or a halogen, and consisting in the reaction products :

- of at least one maleic anhydride represented by formula (I) :

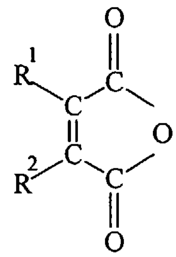

(I)

wherein $R^1$ and $R^2$ are such as defined above ;

- of at least one compound (II) having at least one $-NH_2$ function and at least another function F selected from the group consisting of -OH, $-NH_2$, -NH-, -COOH,

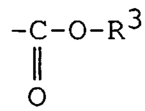

or

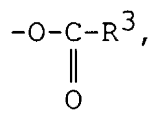

$R^3$ representing a $C_1$-$C_5$ alkyl group ;

- of at least one compound (III) capable of forming the chain of the prepolymer by polycondensation and/or polyaddition,

said compound(s) (II) having first reacted with said maleic anhydride(s) (I) in order to open the maleic anhydride rings with formation of maleamic acid functions (f'):

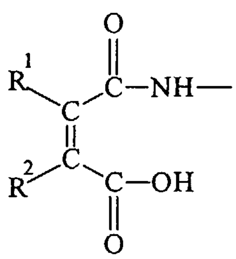

(f')

said maleamic acid functions having then been at least partially closed again under the action of heat into maleimides N-substituted by groups functionalized by a function F,
the chain of said prepolymers having been formed by polycondensation and/or polyaddition :

- of the N-substituted maleimide formed bearing the function F ;
- of compound(s) (III) ;
- of uncyclized products bearing or not a function F formed simultaneously with said N-substituted maleimides ;
- of maleic anhydride(s) (I) which could have remained in excess after their opening by compound(s) (II) ;

the functionalities of compound(s) (III) being selected in order to allow the constitution of the chain with the grafting of said N-substituted maleimides on the chain directly by their function F when the latter is at least one selected among -OH, $-NH_2$, -NH- and -COOH, or after transesterification of the functions F when the latter are $-COOR^3$ or $-OCOR^3$ in order to allow the condensation or the addition of said N-substituted maleimide on the chain,

the functionalities and proportions of compounds (II) and (III) having been selected in order to exclude any gelation of the reaction medium.

**2.** Compositions according to claim 1, characterized by the fact that compound(s) (II) has (have) reacted with anhydride(s) (I) under stoechiometric or substantially stoechiometric conditions or in excess of anhydride(s) (I) with respect to compound(s) (II).

**3.** Compositions according to either of claims 1 and 2, characterized by the fact that the anhydride of the formula (I) is maleic anhydride.

**4.** Compositions according to any of claims 1 to 3, characterized by the fact that the compound (II) is selected among the compounds represented by the formulae $H_2N$-A-OH, $H_2N$-A-COOH, $H_2N$-A-$COOR^3$,

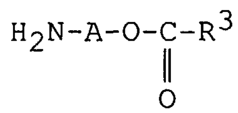

and $H_2N$-A-$NH_2$, wherein A represents a straight, branched or cyclic alkylene group, or an arylene group, it being possible for said groups to be interrupted by oxygen or sulfur atoms, or by -$NR^4$- groups, wherein $R^4$ represents hydrogen or alkyl.

**5.** Compositions according to claim 4, characterized by the fact that the compound (II) is selected among :

- aminoalcohols, such as ethanolamine, propanolamine, isopropanolamine, 2-(2-aminoethoxy)ethanol, N-(2-aminoethyl)ethanolamine ;
- aminoacids, such as valine, p-amino-benzoic acid, alanine, 2-aminohexanoic acid, 6-aminohexanoic acid, 7-aminoheptanoic acid, 2-aminoisobutyric acid ;
- the methyl or ethyl esters of the abovementioned aminoacids ;
- the esters of carboxylic acids having 2 to 5 carbon atoms, such as acetic acid, with the abovementioned aminoalcohols ;
- diamines, such as ethylenediamine, 2-methyl-1,5-pentamethylenediamine, hexamethylenediamine, 2,2,4-and/or 2,4,4-trimethylhexamethylenediamine, dodecamethylenediamine, 5-methylnonamethylenediamine, decamethylenediamine, isophoronediamine, bis(4-aminocyclohexyl)methane, bis(3-methyl-4-aminocyclohexyl)methane, bis(3-methyl-4-amino-5-ethylcyclohexyl)methane, 1,2-bis(4-aminocyclohexyl)ethane, 2,2'-bis(4-aminocyclohexyl)propane, 2,2'-bis(3-methyl-4-aminocyclohexyl)propane, 4,7-dioxadecane-1,10-diamine, 4,9-dioxadodecane-1,12-diamine, 4,7,10-trioxatridecane-1,13-diamine ; and
- polyoxyethylenated and/or polyoxypropylenated di- or triamines ;

and also trifunctional compounds such as L-serine, 3-hydroxy 4-amino benzoic acid and 3-amino 4-hydroxy benzoic acid and other triamines such as N-(2-aminoethyl)-1,2-ethanediamine and N-(3-aminopropyl)-1,3-propanediamine.

**6.** Compositions according to any of claims 1 to 5, characterized by the fact that, when the N-substituted maleimide has a function F which is -OH, -$NH_2$ or -NH-, the compounds (III) are :

- at least one polyacid and/or at least one cyclic anhydride ; and
- at least one compound selected among a polyol, a mono- or polyfunctional epoxy, a polyamine and a polyisocyanate ; or
- at least one polyisocyanate ; and
- possibly at least one compound selected among a polyol, a mono- or polyfunctional epoxy, a polyacid and/or a cyclic anhydride and a polyamine.

**7.** Compositions according to any of claims 1 to 6, characterized by the fact that, when the N-substituted maleimide has a function F which is -COOH, the compounds (III) are :

- at least one compound selected among a polyol, a mono- or polyfunctional epoxy or a polyamine ; and
- possibly a polyacid and/or a cyclic anhydride or a polyisocyanate ; or

- at least one polyisocyanate ; and
- possibly at least one compound selected among a polyol, a mono- or polyfunctional epoxy, a polyacid and/or a cyclic anhydride and a polyamine.

**8.** Compositions according to any of claims 1 to 7, characterized by the fact that, when the N-substituted maleimide has a function F which is

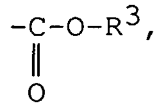

the compounds (III) are :

- at least one compound allowing the transesterification, having a function -OH and at least one another function selected among -OH, -NH- and -COOH ; and
- in the case where this other function is -OH or -NH-, the compounds (III) as defined in claim 6 ; and
- in the case where this other function is -COOH, the compounds (III) as defined in claim 7.

**9.** Compositions according to any of claims 1 to 8, characterized by the fact that, when the N-substituted maleimide has a function F which is

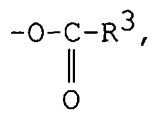

the compounds (III) are :

- at least one compound allowing the transesterification, having an acid function and at least another function selected among -OH, -NH- and -COOH ; and
- in the case where this other function is -OH or -NH-, the compounds (III) as defined in claim 6 ; and
- in the case where this other function is -COOH, the compounds (III) as defined in claim 7.

**10.** Compositions according to any of claims 6 to 9, characterized by the fact that the polyols as compounds (III) are selected among propylene glycol, dipropylene glycol, diethylene glycol, ethylene glycol, 1,3-butanediol, 1,4-butanediol, neopentyl glycol, triethylene glycol, tripropylene glycol, butylene glycol, glycerol, trimethylol propane, 1,6-hexanediol, 1,4-cyclohexane diol, 1,4-cyclohexane dimethanol, 2-methyl-1,3-propane diol, 2-butyl-2-ethyl-1,3-propane diol, 1,2-bis(hydroxyethyl)cyclohexane, 4'-(2-hydroxyethoxy)-2,2-dimethyl-2-hydroxyacetophenone, 2,2-dimethyl-3-hydroxypropyl-2,2-dimethyl-3-hydroxypropionate and dibromoneopentylglycol, as well as polyether polyols, polyester polyols, polyurethane polyols having a weight average molecular weight between 200 and 1000.

**11.** Compositions according to any of claims 6 to 9, characterized by the fact that the epoxy compounds as compounds (III) are selected among epichlorhydrine, 7-oxabicyclo[4.1.0]heptane, 3,4-epoxycyclohexylmethyl 3,4-epoxycyclohexane carboxylate, bisphenol A diglycidyl ether, 1,2-epoxyhexadecane, 3,3,3-trichloropropylene oxide and allyl glycidyl ether.

**12.** Compositions according to any of claims 6 to 9, characterized by the fact that the polyisocyanates as compounds (III) are selected among 4,4'-diphenylmethane diisocyanate, trimethylhexamethylene diisocyanate, toluene diisocyanate, isophoronediisocyanate, tetramethylene diisocyanate, pentamethylene diisocyanate, 4,4'-dicyclohexylmethane diisocyanate, 2,2,4-trimethylhexamethylene-1,6-diisocyanate, triphenylmethane-4,4',4"-triisocyanate, polymethylene polyphenylisocyanate, m-phenylene diisocyanate, p-phenylene diisocyanate, 1,5-naphtalene diisocyanate, naphtalene-1,4-diisocyanate, diphenylene-4,4'-diisocyanate, 3,3'-bi-tolylene-4,4'-diisocyanate, 1,4-cyclohexylene dimethylene diisocyanate, xylylene-1,4-diisocyanate, xylylene-1,3-diisocyanate, cyclohexyl-1,4-diisocyanate and 3,3'-dimethyldiphenylmethane-4,4'-diisocyanate, as well as prepolymers of the polyurea or polyurethane type, having isocyanate ends, such as the condensates of polyols and/or polyamines with an excess of polyisocyanate ; and the polyisocyanates which contain, in their molecule, an isocyanurate ring and the biurets having isocyanate end functions.

**13.** Compositions according to any of claims 6 to 9, characterized by the fact that the polyacids as compounds (III) are selected among maleic, fumaric, chloromaleic, citraconic, metaconic, itaconic, tetraconic, orthophthalic, isophthalic, terephthalic, succinic, methylsuccinic, adipic, sebacic, tetrabromophthalic, tetrachlorophthalic, glutaric, pimelic and pyromellitic acids.

**14.** Compositions according to any of claims 6 to 9, characterized by the fact that the cyclic anhydrides as compounds (III) are selected among maleic anhydride, succinic anhydride, phthalic anhydride, trimellitic anhydride, pyromellitic anhydride, tetrahydrophthalic anhydride, hexahydrophthalic anhydride, chlorinated anhydrides such as chlorendic anhydride, tetrachlorophthalic anhydride and tetrabromophthalic anhydride, methyltetrahydrophthalic anhydride, nadic anhydride, methyl nadic anhydride, itaconic anhydride, citraconic anhydride, and glutaric anhydride.

**15.** Compositions according to any of claims 6 to 9, characterized by the fact that the polyamines as compounds (III) are selected among ethylene diamine, 2-methyl-1,5-pentamethylene diamine, trimethylexane-1,6-diamine, hexamethylene diamine, 2,2,4-and/or 2,4,4-trimethylhexamethylenediamine, dodecamethylenediamine, trimethylhexamethylenediamine, 5-methyl-nonamethylenediamine, decamethylenediamine, isophoronediamine, bis(4-aminocyclohexyl)methane, bis(3-methyl-4-aminocyclohexyl)methane, bis (3-methyl-4-amino-5-ethylcyclohexyl)methane, 1,2-bis(4-aminocyclohexyl)ethane, 2',2'-bis(4-aminocyclohexyl)propane and 2,2'-bis(3-methyl-4-aminocyclohexyl)propane.

**16.** Compositions according to any of claims 6 to 9, characterized by the fact that compounds (III) allowing the transesterification, having an OH function and at least another function selected among -OH, -NH- and COOH, are selected among 2-hydroxybenzene acetic acid, parahydroxy benzoic acid, metahydroxy benzoic acid, 2-hydroxy-3-methyl benzoic acid, 2-hydroxy 4-methyl benzoic acid, 2-hydroxy 5-methyl benzoic acid, 2-(butylamino)-ethanol, 2-(cyclohexylamino)ethanol, 2-(phenylamino)-ethanol, 3-hydroxypiperidine, 4-hydroxypiperidine, dipropylene glycol, tripropylene glycol, triethylene glycol, 1,6-hexanediol, 1,4-cyclohexanediol, 1,4-cyclohexanedimethanol, 2-butyl 2-ethyl 1,3-propanediol and 1,2-bis (hydroxethyl) cyclohexane.

**17.** Compositions according to any of claims 6 to 9, characterized by the fact that compounds (III) allowing the transesterification, having an acid function and at least another function selected among -OH, -NH- and -COOH, are selected among 2-hydroxybenzene acetic acid, parahydroxy benzoic acid, metahydroxybenzoic acid, 2-hydroxy 3-methyl benzoic acid, 2-hydroxy 4-methyl benzoic acid, 2-hydroxy 5-methyl benzoic acid, N-methyl glycine, 2-methylamino benzoic acid, orthophtalic acid, terephthalic acid, isophthalic acid, adipic acid, pimelic acid, sebacic acid, tetrabromophtalic acid and tetrachlorophtalic acid.

**18.** Compositions according to any of claims 1 to 17, characterized by the fact that the number average molecular weight ($\overline{Mn}$) of prepolymers (A) is between 350 and 5000, especially between 500 and 3000 (as measured by GPC, polystyrene standard).

**19.** Compositions according to any of claims 1 to 18, characterized by the fact that prepolymers (A) include 0.02 to 5 moles of maleimide groups, especially 0.05 to 2 moles of maleimide groups, by kg of prepolymer.

**20.** Prepolymers according to any of claims 1 to 19, characterized by the fact that, after their formation, the acid end functions of prepolymers (A) have been reacted with a monoepoxy compound in order to adjust their acid value especially to a value lower than 5 mg KOH/g.

**21.** Compositions according to anyone of claims 1 to 20, characterized by the fact that they further comprise at least one compound (A') selected among N-substituted maleimides, represented by the formula :

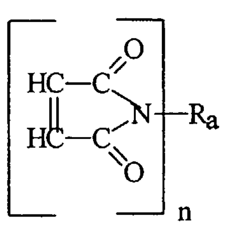

or

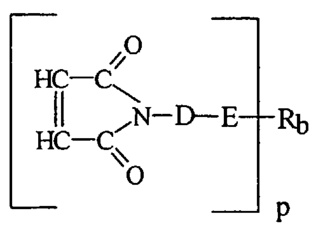

wherein :

- $R_a$, $R_b$ = mono- to tetravalent hydrocarbon group, which is aliphatic, aromatic or which has an aliphatic-aromatic mixed structure ;
- n, p = 1 to 4 ;
- D = alkylene, arylene, alkylarylene or arylalkylene group ; and
- E is an ester linkage (COO or OCO) or an urethane linkage

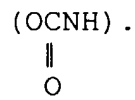

**22.** Compositions according to anyone of claims 1 to 21, characterized by the fact that said at least one component (B) are selected among :

- compounds represented by the formula (V) :

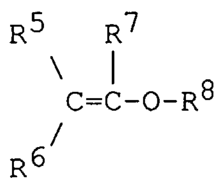

(V)

wherein :

- each of $R^5$, $R^6$ and $R^7$ represents independently hydrogen or an aliphatic group, preferably a $C_1$-$C_{12}$ alkyl group, such as methyl, ethyl and propyl ; and
- $R^8$ represents an aliphatic group or an aromatic group ;

- compounds represented by the formula (VI) :

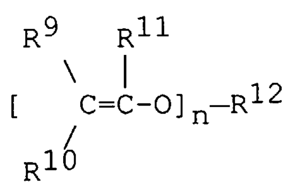

(VI)

wherein :

- each of $R^9$, $R^{10}$ and $R^{11}$ represents independently hydrogen or an aliphatic group, preferably a $C_1$-$C_{12}$ alkyl group, such as methyl, ethyl and propyl ; and
- $R^{12}$ is a n-valent residue of an organic polyol ;
- n is an integer from 2 to 6 ;

- N-vinyl pyrrolidone, N-vinyl imidazole, 2-vinyl pyridine, N-vinylcarbazole, N-vinyl caprolactam, paramethoxystyrene, isoeugenol, 4-propenyl-anisole, monobutyl 4-vinylbutoxy carbonate, monobutyl 4-propenyl butoxycarbonate, N-vinyl-formamide and its derivatives.

**23.** Compositions according to anyone of claims 1 to 22, characterized by the fact the ratio of the number of double bonds of said at least one electron enriched compounds (B) to the number of double bonds of said at least one electron depleted compounds (A) and optionally (A') is in the range between 1:5 to 5:1.

**24.** Compositions according to anyone of claims 1 to 23, characterized by the fact they do not include any photoinitiator

nor any photosensitizer.

**25.** Compositions according to anyone of claims 1 to 24, characterized by the fact they further include at least one component selected among a monomer or oligomer reactive diluent, a non reactive solvent or diluent, and an usual additive such as a pigment.

**26.** A method of coating comprising :

- applying to a substrate a film of an ultraviolet or visible light polymerizable and/or crosslinkable composition, said composition being as defined in anyone of claims 1 to 25 ; and
- curing said composition by exposing said film to ultraviolet or visible light.

**27.** The method according to claim 26, characterized by the fact that the curing of the composition is conducted to a tack-free state.

**28.** Polymerized and/or crosslinked compositions obtained by the crosslinking of the compositions as defined in anyone of claims 1 to 25.

**29.** Substrates having thereon a cured film obtained by curing an ultraviolet or visible light polymerizable and/or crosslinkable composition, said composition being as defined in anyone of claims 1 to 25.